# EUROPEAN PATENT APPLICATION

(11) **EP 2 763 040 A1**
(43) Date of publication of application: **06.08.2014**
(21) Application number: 13000558.0
(22) Date of filing: 04.02.2013
(51) Int. Cl.: G06F 9/54

(54) **Intelligent automated online transaction system for automated interaction with online transaction web sites**

(71) Applicant: Buhl Data Service GmbH, 57290 Neunkirchen (DE)
(72) Inventor: Bierwas, Ingo, 57555 Mudersbach (DE); Dengler, Dietmar, 66606 St. Wendel (DE); Porta, Daniel, 66687 Wadern (DE); Nesselrath, Robert, 66111 Saarbrücken (DE); Germesin, Sebastian, 20251 Hamburg (DE)
(74) Representative: Grünecker, Kinkeldey, Stockmair & Schwanhäusser

(57) **Abstract**

The present disclosure relates to methods, techniques, and systems for providing adaptive automated interaction capabilities for computer applications that request automated conducting of domain specific transactions via a domain specific online transaction website, e.g. an online-banking web site in a failure-proof manner and, in particular, to methods, techniques and systems for employing adaptive mixing of script-based and avatar-based execution entities for delegating sub-tasks and activities of a domain-specific transaction workflow for automated processing via a domain-specific online transaction website, the transactions being requested by a third party computer application and the domain e.g. pertaining to online banking.

Embodiment code scripts such that they are robust for automated conducting of online transactions via online transaction website in particular when confronted with marginal changes in the syntactic structure of the underlying website. Moreover, functional activities as elements of requested online transactions, or in other words distinguishable interaction patterns describable on a macro level (e.g. a login pattern) are reflected in the structure of the scripts and represented only once to prevent redundancy, increase re-use and by that increase efficiency in customizing and maintaining the scripts.

Besides reducing the time for repairing failing scripts, the task of repairing such failing scripts is partly automated and functionally equivalent fallback solutions are provided that assure continued operation such that the automated conducting of the requested transaction is reliably achieved even in the case of a single script eventually failing to execute correctly.

## Description

### TECHNICAL FIELD

The present disclosure relates to methods, techniques, and systems for an automated online transaction system that enables computer applications to request automated conducting of domain specific transactions via domain specific online transaction websites in a failure-proof manner.

### BACKGROUND

The World Wide Web provides a perfect infrastructure for efficiently conducting transactions between customers on the one hand and vendors on the other hand. As, naturally, the vendors, or in other words, offerers of transactions, have the largest incentive to offer these online transactions in a way that is most efficient for themselves, consequently a larger part of the effort, for example, data entry and the like, is transferred to the customers side. Accordingly, online transaction websites are generally created such that a human being may conduct a plurality of transactions via the online transaction website by performing one or more tasks with the website that result in a number of particular activities, like, for example, logging in by entering a username and password and pressing the login button, entering transaction information and the like. Typically, online transaction websites are domain specific, i.e. they offer transactions that pertain to a specific domain, like for example, online shopping (e.g. Amazon.com) or online banking (e.g. banking web sites of banking institutes), or other domains of customer/vendor transactions.

In order to keep efforts on the customer side reasonable, the offerers of these domain specific online transaction websites have invested in usability such that some principals of performing these domain specific online transactions are at least within one domain very similar, or even the same, such that a number of online transaction websites that pertain to the same domain share similar principals of structure, information presentation, user workflows and the like. More particularly, for the example in the transaction domain of online banking, various standards have been established for online banking like, for example, HBCI or FinTS, that even allow an automated interaction based on these standards. However, in that specific example, the number of financial institutes making use of these standards is limited and in addition, these standards are not fully adopted internationally.

Thus, a customer willing to interact not only with one but with number of online transaction websites pertaining one and the same domain, for example, a number of different online banking websites (because a user may have to govern a number of different accounts at different banks) would not be enabled to manage all these different accounts based on a single interface but would instead be forced to enter all of the specific banking web sites in order to conduct the requested transactions. More particularly, the user would not be able to use a single interface that offers an automated administration of these different accounts via different online banking web sites as any of these domain specific online transaction websites may use a different syntactical structure, slightly different appearance, and the like, such that the user would be thrown back to again manually interact with any of the single online banking websites instead.

To solve this problem, several solutions have been developed in the prior art, for example, screen parser or screen scraper that work on the syntactic HTML code of the respective online transaction website (e.g. an online banking web site). According to these prior art techniques, an automated online transaction is conduced in the form of a respective HTTP request to the web server (of the online transaction provide, e.g. a baking institute). The answers that are handed back in response are processed in the form of HTML documents.

However, these techniques are failure prone since they operate on the level of the HTML code of an online transaction website. Thus, they are rather sensitive and vulnerable when facing even minimal changes to the website, in particular minor changes that human user not even notice as they might have been applied to the underlying syntactical structure of the online transaction website. The result is that these methods are unreliable and time / cost intensive to maintain.

As an alternative, prior art technologies process semi-structured websites based on computer-based learning and pattern recognition that makes use of the syntactic pattern and layout structures of HTML tree of the respective online transaction website. However, the applicability of these techniques has strong limits since the structural information of an online transaction websites is, in a lot of cases, not solely derivable from the online transaction website's HTML structure alone. In contrast, a transaction-oriented understanding of the respective online transaction website rather is derived from its visual appearance which only partly is determined by its HTML tree structure.

In addition, the prior art techniques limiting the automated interaction with online transaction websites to HTTP requests strongly limits the interaction capabilities. More particularly, the visual appearance of an online transaction website that is continuously optimized to increase usability for human interaction is, in a lot of cases, based on changes in underlying Java script code or a cascading style sheet template (CSS). This optimization of the visual appearance may even be dynamic in response to actual human interactions with the online transaction websites. However, the above described HTTP based prior art methods would not identify such changes as they are not reflect in underlying HTWL structures but Java script and / or CSS instead.

Thus, there is a need for improved methods and systems for automated interaction of software applications with online transaction websites for conducting of transactions with the websites. This object is solved by the subject matter of the independent claims. Preferred embodiments are subject to the dependent claims.

In the following, a summary is provided to introduce a selection of representative concepts in a simplified form that are further described below in the detailed description. This summary is not intended to identify key features or essential features of the claimed subject matter, nor is it intended to be used in any way that would limit the scope of the claimed subject matter. Briefly, various aspects of the subject matter described herein are directed towards a technology by which a web-service is provided that employs adaptive mixing of hard-coded scripts (i.e. script-based execution entities) and knowledge-based modules (i.e. avatar-based execution entities) for automated and robust processing of online transactions requested by a computer application.

In response to a computer application requesting conducting of an online transaction at one of the domain specific online transaction websites, the requested transaction is mapped to a domain-specific, abstract transaction workflow model build from a sequence of sub-tasks. In one aspect, subtasks comprise functional activities performed while conducting an online transaction in the particular domain and are build from linking elements of taxonomic models. The taxonomic models pertain to the particular domain and comprise shared taxonomic elements of a plurality of online transaction websites of that domain. In an example implementation, the shared taxonomic models comprise a task model, a navigation model and a GUI model, each of the models being specific to the particular domain.

In order to execute the functional activities of the subtasks, each subtask is delegated in sequence of the workflow model to a script with the highest priority with respect to the particular subtask and the particular website. While each script may be hard-coded and adapted for executing defined functional activities at one particular website of the defined domain, the modules operate on semantic concepts by interpreting the visual appearance of the transaction website using domain-specific classifications. Thus, the modules can adapt dynamically to numerous different transaction websites of the same domain by mapping syntactic data of a particular online transaction websites to domain specific semantic concepts based on stored domain-specific knowledge. In an example implementation, this knowledge is codified based on rules, regular expressions, interaction patterns, workflows and search strategies reflecting interaction patterns of a human user with online transaction websites of the domain. Thus, in case the invoked static script fails in executing the requested subtask, as a real-time backup, a knowledge-based module is invoked that dynamically adapts the execution of the subtask to provide robustness of the execution of the transaction workflow.

In an example implementation, the online transaction website is loaded and rendered to be wrapped into a lightweight document object model, DOM, such that the scripts as well as the modules during execution have access to the online transaction website via web-browser component to interact with the website and / or derive from the website semantic and visual information based on the DOM tree of the website.

In result, computer applications are provided with adaptive capabilities for automated interaction with online transaction websites of a particular domain, i.e. domain-specific online transaction websites like for example online banking websites. Other advantages may become apparent from the following detailed description when taken in conjunction with the drawings.

### BRIEF DESCRIPTION OF THE DRAWINGS

Figure 1 schematically shows the interaction of a user with online transaction web sites.
Figure 2 schematically shows an example of a system architecture for an automated online transaction system:
Figure 3 schematically shows an example of mapping real world domain specific transactions to abstract transaction models.
Figure 4 schematically shows the levels of granularity in modeling abstract transaction models.
Figure 5 schematically illustrates linking of elements of a task model, a navigation model and a GUI model into an abstract transaction model.
Figure 6 schematically compares exemplary steps of a "LogOut" subtask in execution by a script-based execution entity versus an avatar-based execution entity.
Figure 7 schematically shows an exemplary sequence illustrating examples of procedures performed with an automated online transaction system.
Figure 8 illustrates an exemplary sequence of steps of an automated auto-categorization system for online transactions.
Figure 9 illustrates an exemplary sequence of steps of a self-learning enhancement for an auto-categorization system of online transactions.

### DETAILED DESCRIPTION

Embodiments described herein provide computer and network based methods, techniques and systems for providing adaptive automated interaction capabilities for computer applications for automated conducting of domain specific transactions via a domain specific online transaction website, e.g. an online-banking web site in a failure-proof manner and, in particular, to methods, techniques and systems for employing adaptive mixing of script-based and avatar-based execution entities for delegating sub-tasks and activities of a domain-specific transaction workflow for automated processing via a domain-specific online transaction website, the transactions being requested by a third party computer application and the domain e.g. pertaining to online banking..

In at least one example embodiment, a computer-implemented system for automated conducting of domain-specific online transactions by automated interacting of the system with a domain-specific online transaction website to conduct requested online transactions is provided. As a part of this system, a transaction model database stores a plurality of domain-specific abstract transaction models, each transaction model comprising a sequence of subtasks comprising one or more functional activities to be performed for conducting an online transaction on online transaction websites pertaining to one domain, the subtasks being build from linking elements of one or more shared taxonomic models of a plurality of online transaction websites, each of the plurality of online transaction websites pertaining to the one domain. As a further part of this system, a script engine comprises script-based execution entities, each script-based execution entity adapted and registered for executing one or more functional activities of one or more subtask on at least one of the plurality of online transaction websites based on one or more script elements. In addition, an avatar engine is provided that comprises avatar-based execution entities, each avatar-based execution entity adapted and registered for executing one or more functional activities of one or more subtasks on the plurality of online transaction websites based stored domain-specific knowledge. As an additional part of this system, a controller is provided that receives a request for conducting an online transaction pertaining to the one domain on one of the plurality of online transaction websites, in response to the receiving triggers the automated conducting of the requested online transaction on the one online transaction website based on mapping, in response to the request, the requested online transaction to one of the plurality of abstract transaction models and invokes in sequence the execution entities executing the functional activities of the sequence of subtasks of the mapped abstract transaction model. While doing that, the controller monitors the execution of any invoked execution entity to invoke an alternative execution entity in case an initially invoked execution entity fails in executing a functional activity on the one online transaction website.

In a further example embodiment, the shared taxonomic models comprise at least a task model, a navigation model and a GUI model, each of the models being specific to the one domain. In an alternative example embodiment, the stored knowledge is build and codified based on rules, regular expressions, interaction patterns, workflows and search strategies reflecting interaction patterns and strategies of a human user conducting a domain-specific transaction via a web browser on an online transaction website pertaining to the one domain. In yet another example embodiment, each script element is implemented as a hard-coded script that when invoked by the controller operates to execute at least one functional activity at one particular of the plurality of online transaction websites. In further embodiments, each avatar-based execution entity is adapted to operate on semantic concepts specific to the one domain by interpreting the visual appearance of the one of the plurality of online transaction websites using domain-specific classifications to map syntactic data of the one online transaction website to the domain specific semantic concepts. In other example embodiments, the system further comprises a transactional web service that acts as interface between the controller and a computer application operated by a user, the computer application requesting online transactions pertaining to the one domain on one of the plurality of online transaction websites, the controller receiving the request and handing back the response from conducting the requested online transaction back to the computer application via the web service interface. In further example embodiments, the system in addition comprises a web browser component adapted for loading and rendering an online transaction website to wrap the website into a lightweight document object model, DOM, such that the script engine as well as any script element during execution has access to the loaded and rendered one of the plurality of online transaction websites via the web-browser component to interact with the one online transaction website and / or derive from the one online transaction website semantic and visual information based on the DOM tree of the online transaction website. In yet another example embodiment, the controller is further adapted to maintain a capability matrix, the capability matrix registering to each sub task one or more execution entities, each one registered execution entity having associated information indicating on which of the plurality of online transaction websites the one registered execution entity can execute which functional activities of the subtask it is registered to. In further example embodiments, the controller is additionally adapted for automatically adapting the capability matrix in case a script-based execution entity fails in executing a requested functional activity by adjusting the invocation priorities of the execution entities registered with the subtask that requested the failing activity. In at least one further embodiment, each one registered execution entity has associated an invocation priority, said invocation priority being unique for any execution entity being registered for one particular subtask, wherein the controller is adapted to invoke execution entities according to their unique invocation priority and the controller re-directs a request to an execution entity with a next-lower invocation priority in case an initially invoked execution entity with a higher invocation priority failed in execution of the requested functional activity. In further example embodiments, per default for any subtask at least one script-based execution entity and at least one avatar-based execution entity is registered, the at least one script-based execution entity per default having associated thereto a higher invocation priority such that the avatar-based execution entity has a lower invocation priority associated thereto and acts as a fallback solution at run-time in case the execution of the one script-based execution entity fails. In other embodiments, the one domain pertains to online banking and the plurality of online transaction websites pertaining to the one domain are a plurality of online banking websites.

In at least one example embodiment, a method is provided for performing the actions of any of the above described techniques. In at least one example embodiment, a computer-readable medium is provided having stored thereon contents, for example, computer-readable instructions that, when executed on a computer, are configured for performing the actions of any of the above described techniques.

The computer-readable medium may be, for example, a computer-readable memory means communicatively coupled to a computer system, which stores the computer-readable instructions. In other example embodiments, the computer-readable medium may include for example, computer-readable transmission mediums, including wireless-based and wired/cable-based mediums which store and/or transmit signals containing computer-readable instructions for performing the actions of any of the above described techniques.

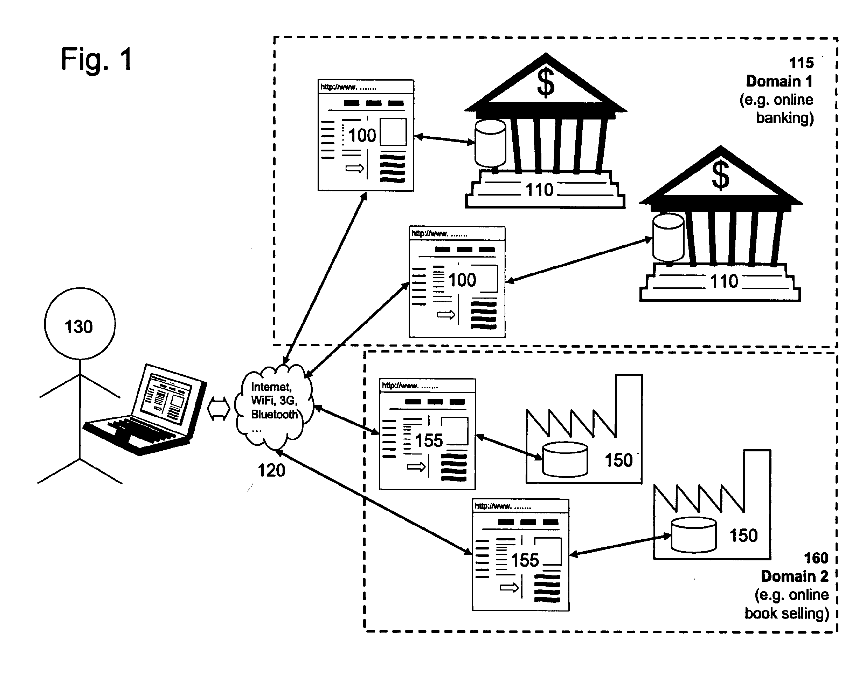

Figure 1 illustrates exemplary online transaction websites 100 and 155 provided by transaction providers 110 and 150. In this example, online transaction websites 100 pertain to one specific domain and online transaction websites 155 pertain to another, i.e. different domain. In this illustrative example, online transaction websites 100 pertain to the domain of online banking, i.e. are online banking websites 100 and are provided by domain specific transaction providers 110, i.e. banking institutes 110. In this illustrative example, online transaction websites 155 pertain to a domain different from online banking, e.g. online buying of books and are provided by domain specific transaction providers 150, i.e. online book sellers 150.

The online and made available, for example via internet 120 access, to user 130. As indicated in Figure 1, transaction provider 110 runs applications 150 that process data and information provided by user 130 via transaction website 100 and execute the commercial transaction initiated by user 130 via transaction website 100. The transactions conducted via the transaction system 190 illustratively indicated in Figure 1 may be a commercial transaction, like for example, online buying and/or online banking. Thus, in an exemplary embodiment, a commercial transaction, or, in other words, transactions may pertain to a specific domain. In one exemplary embodiment, the specific domain may be the domain of banking such that the transaction provider 110 is constituted by a bank and the transaction website 100 is constituted by an online banking website provided by bank 110. Thus, in this exemplary embodiment, a user 130, in order to conduct a banking transaction, accesses the online transaction website 100 or, in other words, the online banking website 100, for example via internet 120, to initiate banking transactions at a banking institute 110, or in other words, a transaction provider 110. The specific domains and forms of online transaction systems described above however rather have exemplary and illustrative character such that as well as the number of online banking websites 100/155, the number of different domains 115/160 individuals and/or number of computing devices 130 is not limited to the specific form and/or specific number as shown in the example of Figure 1. In contrast, embodiments described herein may apply to various different domains 115/160 and respective domains specific online transaction websites 100/155 and heterogeneous as well as homogeneous computing systems may be used and distributed in other manners in order to implement the invention.

Although the visual appearance of an online transaction website 100/155, e.g. banking website 100, may be rather dynamic and thus frequently changing in structure, content and style, the structural differences in construction of the domain-specific online transaction website 100/155 or, in other words, for example an online banking website 100, may be relatively minor. In other words, a cross comparison of various online transaction websites 100 provided by various different transaction providers 110 pertaining to the same domain of online transaction website 100, i.e. banks 110, may result in the insight that, practically, their online transaction websites' 100 composition, the types and workflows of online transactions they offer, and the activities that are necessary to conduct these transaction workflows may be relatively similar. Accordingly, any human being able to operate on one specific online transaction website 100 pertaining to one specific domain, e.g. a banking website 100, will also be able to operate in a similar way on a different online transaction website 100 that pertains to the same domain 115 (e.g. in this example online banking 115) offered by a different online transaction provider 110 (e.g. in this example another bank 100). For the exemplary case of the domain 115 pertaining to online banking 115, types of transactions may be the creation of a financial overview over different accounts, a list of account transactions, a conducting of a money transfer and the like. Regarding these types of domain specific transactions, in the domain of online banking 115 for example account transactions are usually illustrated in table-like format with columns for the addressee of the transaction, the purpose of the transaction and the money amount. Similarly, from an online transaction website 100 of that domain 115 a template for conducting a money transfer can be mapped into a generalized conceptual view.

Moreover, beside the similarities in structure and composition of domain-specific online transaction websites 100/155, for example banking websites 100, the activities a user 130 would have to execute in sequence as a workflow in order to conduct a domain specific online transaction, e.g. an online banking transaction, at any online transaction website 100 pertaining to the specific domain 115, e.g. online banking 115, are also relatively similar. For example, a user 130, in order to access online transaction website 100, would have to execute a successful login. Moreover, in order to conduct a domain specific online transaction, e.g. a money transfer transaction, a user 130 would have to navigate to the money transfer template in transaction website 100 then enter the respective data therein in order to finally approve and send the money transfer. Usually, after having approved and sent this transaction, online transaction website 100, e.g. in the case of the domain being online banking 115, would ask for a further confirmation by way of a transaction number (TAN), which is a final step to be processed by a user 130 in order to confirm the money transfer. While this workflow and its activities would be observable, other cognitive processes that user 130 typically carries out in order to conduct the above-described domain specific transactions on different online transaction websites 100 of the same domain 115 as provided by different online transaction providers 110 of the same domain are rather implicit. Thus, embodiments described herein enable automated conducting of domain specific online transactions based on a request from a respective computer application 130 by transforming implicit cognitive processes into an explicit, available form.

One way of technically creating this explicit representation is to create hard-coded, static scripts (for example a script for a login procedure that requests from a user the identification number and the like) that are customized, or rather optimized for one particular domain specific transaction on one particular domain specific online transaction website 100. It will be appreciated that a person skilled in the art will have access to the know-how, methods and techniques to hard-code a script according to WWW-standards that triggers an automated activity, e.g. an automated login, on one particular online transaction website 100 with a known syntactical and functional structure. As will be appreciated however, customizing these scripts for a vast number of different online transaction websites 100 pertaining to the same domain 115 and a number of different domain specific transactions is both, expensive in time and money and prone to failure since any even minor changes in the structure and composition of any of the online transaction websites 100 that a script has been customized for would lead to the static script failing to conduct a requested transaction 310 due to a failure in one of the necessary activities for conducting the transaction. However, in order to repair a script such that it will work again in that situation, only marginal adaptations may be necessary that adapt the script to the assumed-to-be-minor changes on the respective online transaction website 100.

Exemplary embodiment described herein address this by, amongst others fulfilling the following requirements: Scripts are coded such that they robust for automated conducting of online transactions via online transaction website 100 in particular when confronted with only marginal changes in the syntactic structure of the underlying website 100; functional activities as elements of requested online transactions, or in other words distinguishable interaction patterns describable on a macro level (e.g. a login pattern) are reflected in the structure of the scripts and are represented only once to prevent redundancy, increase re-use and by that increase efficiency in customizing and maintaining the scripts; and the time for repairing failing scripts is not only reduced but in part automated, too, and, in addition, a functionally equivalent fallback solution is provided that assures continued operation in terms of conducting the transaction even in the case of a failing script.

Based on that, embodiments described herein provide a solution that emulates human behavior on a semantic level of operation in automated interaction with domain-specific online transaction websites 100, e.g. banking websites 100. This automated interaction with online transaction websites 100 / 155 is performed with activities like e.g. information retrieval from online transaction websites 100 / 155. Furthermore, online transactions are conducted in an automated fashion as requested by a user 130, for example via a third party computer application 260 that allows a user 130 to manage a number of different online transaction accounts at various online transaction websites 100 / 155, for example a number of different banking accounts at different banks 110, via one single application interface 260.

Embodiments described herein implement this in a reliable fashion by ensuring the robustness of scripts even when facing syntactic changes a domain specific online transaction website 100 / 155. This is achieved by the script operating on the basis of isolated script elements in terms of single scripted workflow activities. These single, i.e. isolated scripted workflow activities operate on semantic and visual information derived from the document object model tree (i.e. the DOM tree) of the respective online transaction website 100 / 155 that the transaction is intended for. In order to enable this, exemplary embodiments described herein comprise methods for interpreting domain specific templates of an online transaction website 100 pertaining to the same specific domain purely on the basis of visual and semantic information. For that, for example, domain-typical table-like structures of a domain specific online transaction website 100 / 155 are identified, extracted and interpreted using a domain specific rule set and expressions without these table-like structures being presented as HTML tables in the respective HTML code of the online transaction website 100 / 155.

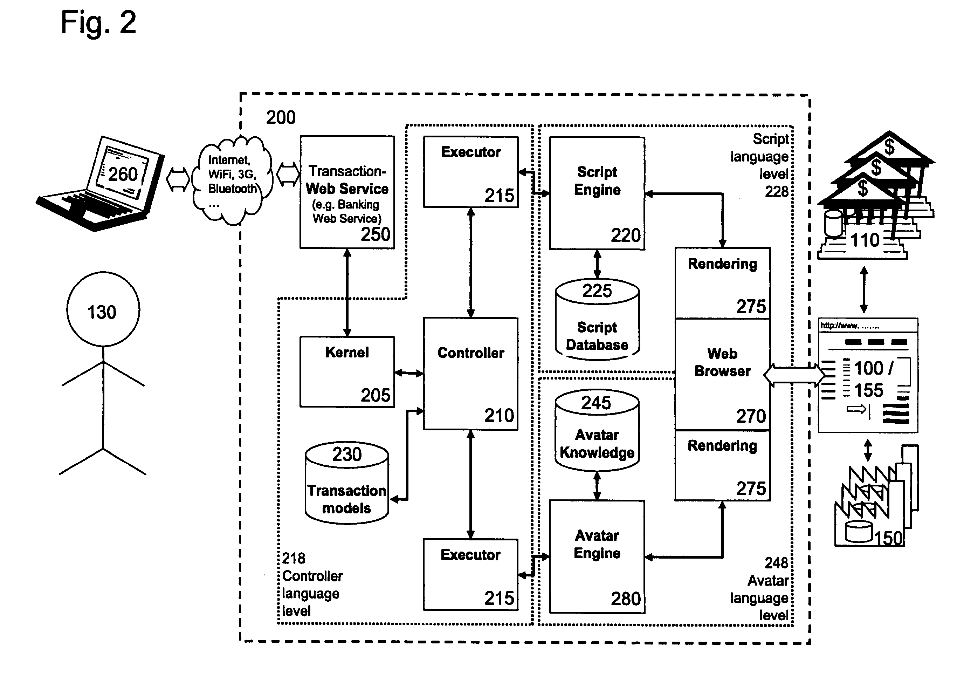

Figure 2 illustrated the system architecture of exemplary embodiments and highlights that the language levels are split into a controller language level 218 and a script / avatar language level 228 / 248. As illustrated in Figure 2, exemplary system architecture 200 contains a controller 210 and a script engine 220. Distinguishing the language levels of the controller 210 and the script engine 220 / avatar 280, i.e. the component level allows for the representation of functional workflow activities pertaining to one domain specific transaction on a macro level. To achieve that, exemplary embodiments described herein rather build from the motivation of a transactional activity (i.e. "what" is intended to be achieved by that transaction activity) rather than the question of how to achieve this effect, e,g, in terms of the technical steps of conducting that transaction. Thus, embodiments described herein emulate a typical user's 130 motivation to, for example, fulfill specific informational requirements (for example, receiving a list of account transactions) or the request for fulfilling an obligation (for example by conducting a money transfer).

Thus, system architecture 200 uses abstract transaction models 230 that are built from abstract functional subtasks which define "what" to do (for example, navigate to the money transfer template on an online banking website 100) rather than defining "how" to do this (like for example defining which menu options to choose in order to move to the money transfer template). The latter, i.e. the "how", is transferred into the script language level 228 of script engine 220. Accordingly, scripts may be specific to one particular online transaction website 100 / 155 being provided by one particular online transaction providers 110 / 150.

In contrast, at the controller language level 218, the transaction model database 230 contains only one particular transaction model for one particular domain 115 / 160 specific transaction (for example in the domain of "online banking" the transaction of "money transfer") that is designed on an abstract level such that it is valid for any of the different online transaction websites 100 / 155 of that one particular domain 115 / 160 independent of the fact that these maybe be provided by a number of different online transaction providers 110 / 150 of that domain 115 / 160.

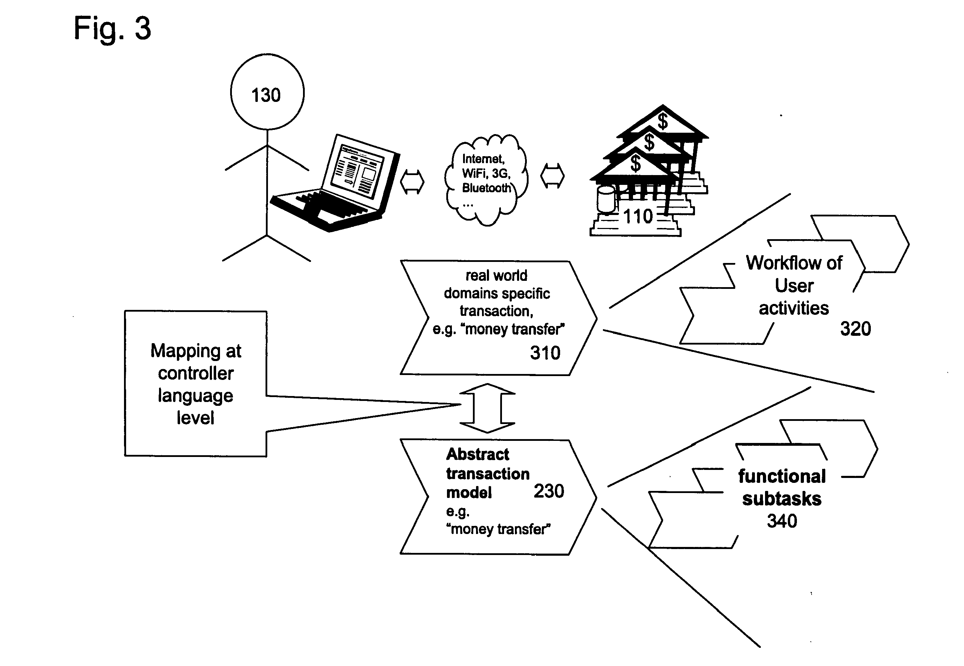

As illustrated in Figures 3, these abstract functional subtasks 340 stored in transaction model database 230 are defined e.g. by scripts 225 that have been customized and thus hard-coded and implemented for one particular domain specific online transaction website 100, for example one specific online banking website 100 provided by on particular banks 110. Thereby, the embodiments described herein provide an efficient modularity that reduces the efforts to maintain the scripts operational as any single script 225 has only the scope of a limited subtask 340 to be fulfilled in one particular domain 115 / 160 (e.g. online banking)on one particular online transaction website 100 / 150 pertaining to that domain 115 / 160 (e.g. one particular online banking website 100) provided by one particular online transaction provider 110 / 150 pertaining to that domain 115 / 160 (e.g. one bank 110). Besides reducing the time and money to be invested for maintaining the scripts, the robustness of the automated interaction with an online transaction website 100 / 155 is increased by that modularity, as only one single particular subtask 340 fails for one single particular online website 100 / 155 in case of failure which significantly decreases the potential impact of such script failure. In other words, even if one single script 225 fails to fulfill one particular subtask 340 at one particular online banking website 100 / 155, any other script 225 still may be operational makes at the same online transaction website 100 / 155. Thus, embodiments described herein provide for efficient failure isolation and identification on a functional subtask level but in addition also provide for temporal fallback solutions for any failing script 225 as will be further described in the following.

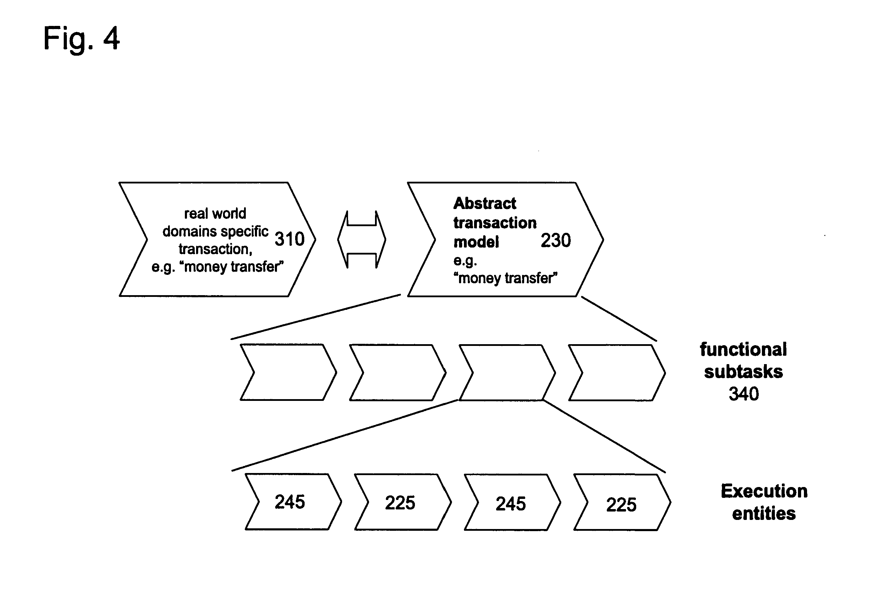

As illustrated in figure 4, these fallback solutions are provided by implementing for any of the subtasks 340 described in transaction models 230 several, i.e. more than one and in some embodiments at least two, execution entities 225 / 245 which can be invoked by controller 210 for conducting any given subtasks modeled in the transaction models 230.

As illustrated in Figure 2 and 4, system architecture 200 at least contains two different execution entities for any subtask 340, namely script-based entities 225 and avatar-based entities 245. These different execution entities implement different strategies for conducting the same functional activity 340: Script-based execution entities 225 are created by specific, hard coded scripts that have been coded and customized for one specific online transaction website 100 / 155 provided by one specific online transaction provider 110 / 150. In contrast, avatar-based execution entities 245 follow a knowledge-based approach that allows for interpreting domain-specific online transaction websites 100 / 155 based knowledge and rules specific to that domain 115 / 160 which is stored in form of the avatar-based execution entities in knowledge base 245. In exemplary embodiments described herein, the domain of the respective online transaction websites 100 / 155 is the domain of online banking or more specifically the domain of interacting with online banking websites 100 / 155 which, as described above, follows domain-specific rules that are however the same (or rather similar) for any online transaction website 100 /155 pertaining to the same domain, namely rules that are more or less the same for any online banking website 100. What is different on any particular online banking website 100 may be a specific implementation of the domain-specific rules.

Accordingly, in case a script 225 for a particular functional activity 340 fails at one particular online transaction website 100 / 155, the controller 210 remains at aiming to conduct the requested functional activity 340 as part of the transaction requested from application 260. for that, as the script 225 has failed, the controller 210 will switch from the initially invoked script-based execution entity 225 (i.e. the execution entity that in this example has just failed) to the at least one alternative execution entity 245 that is avatar-based following a knowledge based approach. This avatar-based execution entity 245 provides a functionally equivalent fallback solution that is provided in real time without any significant down time induced by the failing of the script-based execution unit 225. However, as being knowledge based, the avatar-based execution entity 245 follows a rather cognitive approach which will either reduce performance of conducting the transaction or create higher processor costs at the computer environment used. Nevertheless, robustness of execution of the automated conducting of transactions is achieved.

Embodiments described herein further provide for, at least partly, automated adaption or rather repairing of failing script-based execution entities 225 since from an avatar-based execution entity 245 that has been invoked as a fallback solution for a failing script-based execution entity 225, a new or at least newly-customized script 225 for the specific online transaction website 100 / 155 at which the script-based execution entity 225 has failed can be derived which will replace the failing script-based execution entity 225. Thus, the next time the same functional activity 340 is requested at the same particular online banking website 100, the newly-derived, i.e. repaired script-based execution entity 225 can be invoked and is likely to now successfully conduct the respective subtask 340.

As shown in Figure 2, exemplary embodiments of system 200 provide a server-based service on the one side to a third party client application 260 that initiates requests for execution of respective domain specific transactions (e.g. a "money transfer") at an online transaction website 100 / 155 via the system's interface of a transactional web service 250, for example a banking web service 250. On the other side, a specialized web browser 270 that implements a rendering interface 275 which interacts with the different particular transaction website 100 / 155, or for example different online banking websites 100, that the user of a computer application 260 intends to interact with. Thus, system 200 acts as a proxy between the customer-operated computer application 260 and online transaction websites 100 / 155.

A core component of system 200 is the controller 210 which by the defined kernel interface 205 receives requests for conducting transactions 310 from the transactional web service 250. In response to such requests, the controller 210 maps any requested (real world) transaction 310 to a (abstract) transaction (model) in the transaction model database 230 such that any specific request is mapped to a transaction model 230 which is independent of the provider-specific transaction workflow 320 and/or transaction website-specific workflow activities 320. This mapping is illustratively highlighted in Figure 3.

Based on this mapping, controller 210 enables segmenting the requested (real world) transaction 310 into subtasks 340 that can be delegated by the controller 210 to respective script-based or avatar-based execution entities 225 / 245 via execution interface 215. After having delegated the subtasks 340 to respective execution entities 225 / 245, controller 210 supervises the execution of the respective subtask 340 in order to redirect the subtask 340 to a knowledge-based, i.e. avatar-based execution entity 245 in case the respective script-based execution entity 225 that operates statically has failed.

In some embodiments, transaction web service interface 250 receives a request from computer application 260 and communicates this with controller 210 via kernel interface 205. Based on this communication, the automated conducting of a transaction 310 is initiated. After completion of the transaction 310, the transaction web service interface 250 hands back the transaction's outcome (for example, account information) to computer application 260. For the illustrative example of the transaction domain pertaining to "banking", transaction web service interface 250 is implemented as a banking web service 250 that hands requested banking transactions 310 to controller 210. In this exemplary embodiment, banking web service 250 may also request via client application 260 inputs by the user 130 that are necessary to conduct the requested transaction 310, for example the input of a user PIN, password or TAN and similar security questions. These inputs are enabled by callback methods used by controller 210 to request information for conducting a transaction 310 requested by web service 250.

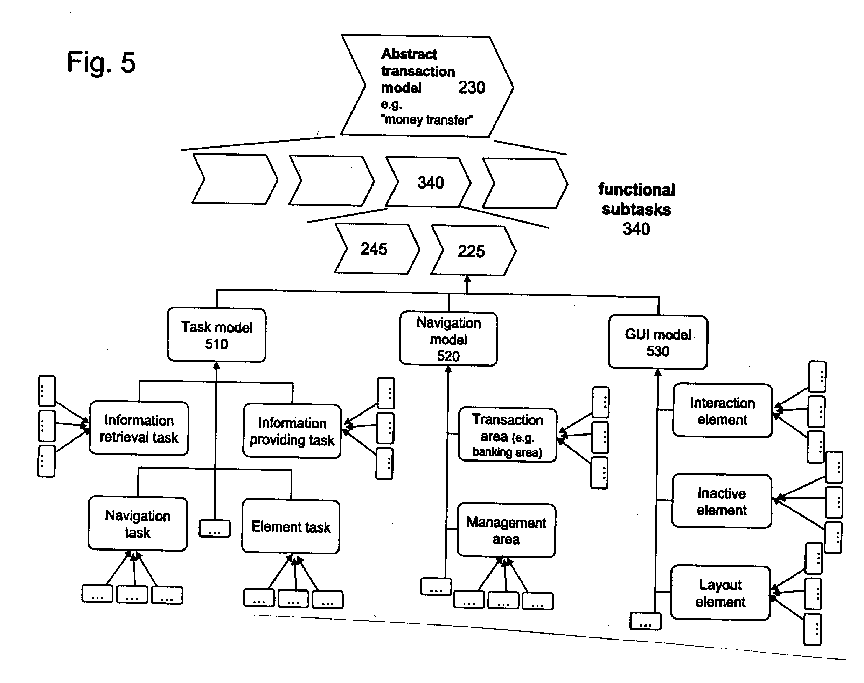

In one exemplary embodiment, transaction model database 230 contains for each transaction 310 to be requested one abstract task model 230 mapping the respective real-world transaction 310 that can be requested. This abstract transaction model 230 is abstract in terms of being independent from a specific user 130 operating a computer application 260 and further being independent from any specific online transaction provider 110 / 150, for example a specific banking institute 100. To achieve that, the abstract transaction model 230 stored in database 230 is built from a sequential workflow of logical subtasks 340 which are necessary to conduct the requested transaction 310. The execution of any of these subtasks 340 is delegated by controller 210 as described above to specialized execution entities 225 / 245 stored in databases 225 / 245. As illustrated in Figure 5, such abstract transaction model 230 is built from linking elements of a task model, a navigation model and a GUI model. These specialized models support the coordination of execution entities 225 / 245. Moreover, these models provide the basis for the semantic lifting of a particular online transaction website 100 / 155 which is the basis of the operation of avatar based execution entities as will be described further below.

More particularly as illustrated in Figure 5, in exemplary embodiments, the single subtask 340 of a transaction model 230 is modeled by way of an expandable, domain specific task taxonomy 510 that distinguishes e.g. information retrieval and information providing tasks. The latter one, i.e. information providing tasks, requests specific information from an online transaction website 100 / 155. For the illustrative example of the transactional domain 115 / 160 pertaining to online banking, such information providing tasks may, e.g. be the providing of an overview over recent account activities, account balance and the like. The other one, i.e. the information retrieval tasks provide information to be entered into the respective online transaction website's templates. In the illustrative example of the transaction domain 115 / 160 pertaining to online banking, such information providing tasks may e.g. be the input of a TAN or PIN number that previously has been requested from the user 130 of computer application 260. This abstract transaction 230 and subtask model 340 thus implements "what" is to be done in terms of functional activities but does not specify "how" it is to done (e.g. in terms of technically defined interaction activities). To achieve that, the task concept 340 specifies additional arguments which are statically annotated with metadata attributes. Thereby, a formalized data interface 215 is defined between controller 210 and execution entities 225/245.

Exemplary embodiments described herein may contain a domain-specific taxonomy 510 of e.g. information retrieval and information providing tasks. For the illustrative example of the transaction domain 115 / 160 pertaining to online banking, such information retrieval tasks may be e.g. get a credit card balance, get a bank report, get TAN requests, get accounts, get login success, get account balance, sync account, get account movements and the like. Similarly, domain-specific information providing tasks pertaining to the domain 115 of online banking may contain tasks like enter login data, enter TAN, answer query, set up account, set up credit card, and the like. However, these are just illustrative examples and embodiments of the technique described herein, which may contain others and in particular additional information retrieval and/or information providing tasks.

The following illustrated example shows the implementation of a subtask 340 "enter TAN" in pseudo code. Here, the metadata attribute "argument description" specifies that the subtask 340 handles an input argument. In contrast, the metadata attribute Argument.Direction.Out would specify that the respective execution entity would have to hand back information.

```
              public class EnterTan : InformationProvidingTask
              {
                    [ArgumentDescription(Direction = ArgumentDirection.In)]
                   public string Tan { get; set; }
               }
```

In contrast to the information retrieving and information providing tasks described above, navigation tasks define which area of a transaction website 100 is to be explored, but similarly these navigation tasks do not determine "how" it is to be navigated thereto. Again, also here, a taxonomic navigation model 520 is provided that maps relevant areas of domain-specific online transaction websites, i.e. typical online transaction websites 100 / 155 pertaining to one particular domain 115 / 160 e.g. online banking websites 100, for example relevant areas of typical online banking websites 100. In that example, before executing a money transfer task, the execution entity 225 / 245 would have to navigate to the area of an online banking website 100 where the money transfer template is located.

In that regard, exemplary embodiments described here use a domain-specific taxonomy 520 for modeling the relevant areas of domain-specific online transaction websites 100 / 155. For the illustrative example of a transaction domain 115 / 160 pertaining to online banking, such areas may be e.g. a management area that may contain areas like a postbox, a financial overview, a landing page, and/or a settings area. In addition, such domain-specific taxonomy 520 pertaining to online banking may model areas like a banking area, a credit card area and an account area. An account area may contain, for example, a single transfer area, an account details area, an account balance area, an account movement area, standing transfers area and/or debit area. Similarly, a credit card area may contain a credit card details area, a credit car movement area, and/or a credit card balance area. However, these are just illustrative examples and such a domain specific navigation model 520, i.e. domain specific taxonomy 520 of an online banking website 100 may contain also different and/or additional area description.

As described in detail above, information retrieval and information providing tasks as well as navigation tasks describe model concepts on a macro-level. In contrast, element tasks provide a domain-specific taxonomy 530 rather on a micro-level. In exemplary embodiments described herein, such element tasks describe dedicated tasks for identifying elements in the document object model tree (DOM tree) of a respective domain specific online transaction website 100 / 155 based on their functionality. This reflects the importance of particular subtasks as, for example, a subtask 340 "Find LogOut button" (determining where and how to find that element on a website). These are explicitly represented as GUI models 530 in the architecture of the abstract transaction models 230. Based on the described domain-specific GUI concepts in the taxonomic GUI model 530 the avatar-based execution entities 245 can execute their knowledge-based mode of operation which is particularly suited to identify single GUI elements in the DOM tree of a domain specific online transaction website 100 / 155.

In exemplary embodiments described herein, this identification can, for example, pertain to the identification of a segmentation or a structure of a domain-specific transaction website 100 / 155, for example, in terms of layout areas as a header, a footer, a navigation bar, a content area and the like. Accordingly, the respective taxonomy of GUI concepts 530 is domain-specific and covers GUI elements that frequently are used in typical transaction websites 100 / 155 pertaining to one and the same domain 115 / 160. For example, in the transaction domain 115 pertaining to online banking, such GUI elements may be an interaction element like e.g. input elements, clickable elements, selectable elements or text elements. Inactive elements may be, for example, a label element. Moreover, layout elements may be, for example, header elements, footer elements or navigation bar elements. However, these are just illustrative examples; other embodiments may contain further and/or additional GUI elements 530. In particular, the granularity of these elements may be increased by describing clickable elements as part of the GUI taxonomy like, for example, maximize buttons, detail buttons, navigation buttons, logout buttons, paging buttons and/or minimize buttons and the like.

Any execution entity 225/245 provides information to the controller 210 as to which subtasks 340 the respective execution entity 225/245 may execute or not execute. This may be stored as a capability matrix (subtasks / execution entities) e.g. in database 230. Embodiments described herein use a white/blacklist approach for mapping the taxonomic information 510-530 as described above. For example, a particular execution entity 225/245 may be able to execute element tasks (whitelist) but may not be able to trigger the respective element (blacklist). Such an execution entity 225/245 may be able to find a login and/or a logoff button but may not, in that example, be able to trigger the respective button.

Besides the whitelist / blacklist information stored in the capability matrix, any execution entity 225/245 has an associated invocation priority which is different for any two execution entities that are associated to the same sub-task 340. In other words, in embodiments described herein, execution entities 225/245 that are associated to the same sub-task 340 all have different invocation priorities such that a strict hierarchy of invocation priorities is established for all execution entities associated to one and the same sub-task 340, i.e. no two execution entities being registered with the same subtask 340 share the same invocation priority with respect to that subtask. Accordingly, controller 210 will direct any incoming requests for a sub-task 340 derived from the incoming transaction request 260 to the registered execution entity 225/245 that has the highest invocation priority with respect to that subtask 340.

While supervising the execution of that sub-task 340 by the invoked execution entity 225/245, controller 210 may detect whether that execution entity 225/245 fails in executing the respective sub-task 340. If that is the case, controller 210 will invoke an execution entity 225/245 associated to the respective sub-task 340 with the next lower invocation priority. Based on that, an escalation mechanism is established that establishes a failure 'proofness', faiklue proof robustness for the automated conducting of respective transactions 230, since the controller 210 is enabled to have a sub-task 340, which a first execution entity 225/245 failed to execute, be alternatively conducted by a second execution entity 225/245 that is also registered with the respective sub-task 340 but that has a lower invocation priority. Only if no execution entity 225/245 with a lower invocation priority can be found, or if all the invoked execution entities 225/245 fail, the requested transaction 310 fails, as a whole. Otherwise, controller 210 will continue to move from one successfully executed sub-task 340 being executed by one execution entity 225/245 to the next sub-task 340, until all the subtasks 340 mapping the requested transaction 310 have been conducted.

Specialized web-browser 270 provides for the loading of and interacting with online transaction websites 100 / 155. In response to a request for a transaction 310 initiated by computer application 260, web-browser 270 will load the respective online transaction website 100 / 155 and wrap that website by rendering and transferring it into a document object model (DOM). This web-browser interface tool 270 thereby abstracts from the specific web-browser implementation and provides a light-weight document object model (DOM). The web-browser interface 270 provides a syntactic element level that allows the automated interaction with the actual online transaction website 100 / 155 in analogy to a human user's interaction with the same website 100 / 155.

This syntactic element level provides for defined interfaces for relevant HMTL elements, for example buttons, text fields, checkboxes, select and the like. Moreover, web-browser interface 270 enabled the semantic avatar element level that expands the syntactic elements with attributes and methods that support the semantic analysis that is performed by the avatar 280 (semantic lifting). For example, the attribute "is clickable" may be introduced in order to indicate whether an element of a website 100 / 155 is clickable. From a semantic perspective, an element is clickable if a click on the element results in an action. From a syntax perspective however, this semantic notion may be achieved using different methods, which is reflected in the "is clickable" attribute. For example, an element may be clickable if it is a button, but it may also be clickable if it is a link or it may be clickable because the element contains an event handler for an on-click event.

In exemplary embodiments described herein, any subtasks 340 provided with transaction models 230 have at least one script-based execution entity 225 and one avatar-based execution entity 245 associated thereto. Script engine 220 handles one of these implementations of execution entities 225 / 245, namely script-based execution entities 225. Embodiments described herein may per default register at least one script-based execution entity 225 as the one with the highest invocation priority with any subtask 340 of a particular transaction model 230 to perform that subtask 340. For that purpose, a library of sequential scripts 225 is provided, from which the matching scripts 225 can be chosen, and executed. In order to choose such matching scripts 225, various criteria may apply, e.g. the category of the sub-task 340 to be executed, the particular transaction provider 110 / 150 and/or the particular online transaction website 100 / 155, for example the specific bank 110 or the specific online banking website 100 and, as well for example the amount and types of transaction accounts of the user 130 operating on application 260. The scripts 225 interact with the specific online transaction website 100 / 155 that is provided by an online transaction provider 110 / 150 for the specific customer 130 such that any sub-task 340 that is requested by controller 210 from script engine 220 is successfully completed. In order to achieve this, script engine 220 as well as script activities during execution of a script 225 has access to the web-browser interface 270.

The second implementation of execution entities is managed by the avatar engine 280. For the avatar engine 280, the hard-coded script approach emulating human-like web-surf behavior as provided by script engine 220 is expanded based on domain-specific knowledge 245 on the domain-specific transactions 310. an initial set of that knowledge is codified with rules, regular expressions, interactions patterns, workflows and the like in avatar knowledge base 245 at development time. However, during execution of system 200, by executing avatar based execution entities additional knowledge may be generated that serves for dynamically expanding and adapting that knowledge base e.g. on the basis of experience from conducted transactions 230. Thus, avatar engine 280 is provided with predetermined knowledge on domain-specific transactions 310 and their workflow activities. In addition, the avatar contains a classification system which enables the semantic analysis of elements of a domain-specific online transaction website 100 / 155 in order to subsequently conduct the requested sub-task 340 requested by controller 210 based on the knowledge gained by that analysis.

In exemplary embodiments described herein, avatar-based execution entity 245 will per default have a lower priority compared to a script-based execution entity 225 being registered with the same subtask 340. Thus, the avatar-based execution 245 entity per default serves as a backup solution in case of a script-based execution entity 225 failing in its fulfillment of a requested sub-task 340. While such a failure might be likely for a hard-coded and thus static script 225 that simulates human-like behavior, the knowledge-based avatar approach is rather robust when faced with minor changes in the appearance of a particular online transaction website 100 / 155 as the avatar 280, in contrast to the script engine, follows a knowledge-based approach applying cognitive principles.

Avatar engine 280 is thus enabled to automatically analyze online transaction websites 100 / 155 by classifying the elements present in a particular website 100 / 155 and, based on that classification, taking over the execution of a sub-task 340 that a script-based execution entity 225 has failed to execute. This is done based on an avatar workflow comprising semantic avatar activities for the identification of and relating to elements of a domain-specific online transaction website 100 / 155. This avatar workflow, its activities and the elements are modeled independent from a particular implementation of such a website 100 / 155 by a specific provider 110 / 150. In the illustrated example of the transaction domain 115 / 160 pertaining to online banking, an avatar workflow is independent from the specific appearance and construction of a specific online banking website 100 but, in contrast, describes an abstract banking workflow 320 based on semantic avatar activities for identification and retrieval of elements of typical online banking websites 100. Accordingly, such avatar workflow implements complex human-like search strategies and generalized behavioral patterns.

Before performing a knowledge-based analysis of particular online transaction website 100 / 155, the particular online transaction website 100 / 155, for example a banking website 100, is transferred into a machine-readable form that allows for the interacting of the avatar 280 with the website 100 / 155. This semantic lifting of e.g. a banking website 100 is based on classifying concrete concepts present on the respective online transaction website 100 / 155 in order to transfer these concrete elements into abstract concepts of the above-described navigation models 520 and GUI models 530. As these abstract concepts 520 / 530 have a hierarchical definition structure the classification also follows a hierarchical approach that uses inheritance. Naturally, the classification procedures for identification of an abstract concept 520 / 530 strongly depend on the type of concepts. For example, concepts of the type 'layout elements' may generally be identified based on their position, size and structure. In contrast, concepts of the type 'interaction element' may be identified based on their textual characteristics, in other words their content, as they will have domain-specific text classifications. Typically, for example, a logout button (that inherits in the hierarchy of the type 'interaction elements') may be identified based on the text on a website's 100 / 155 button, such as "logout", "close", "logoff", and the like. Embodiments described herein use a multi-step classification procedure that establishes a dependency in the classification of concepts from preceding classifications of other concepts. This interdependency is provided and calculated at run time as backward chaining. An illustrative example may be the classification of a "logout" button which has the preceding classification of a "clickable" element as a prerequisite.

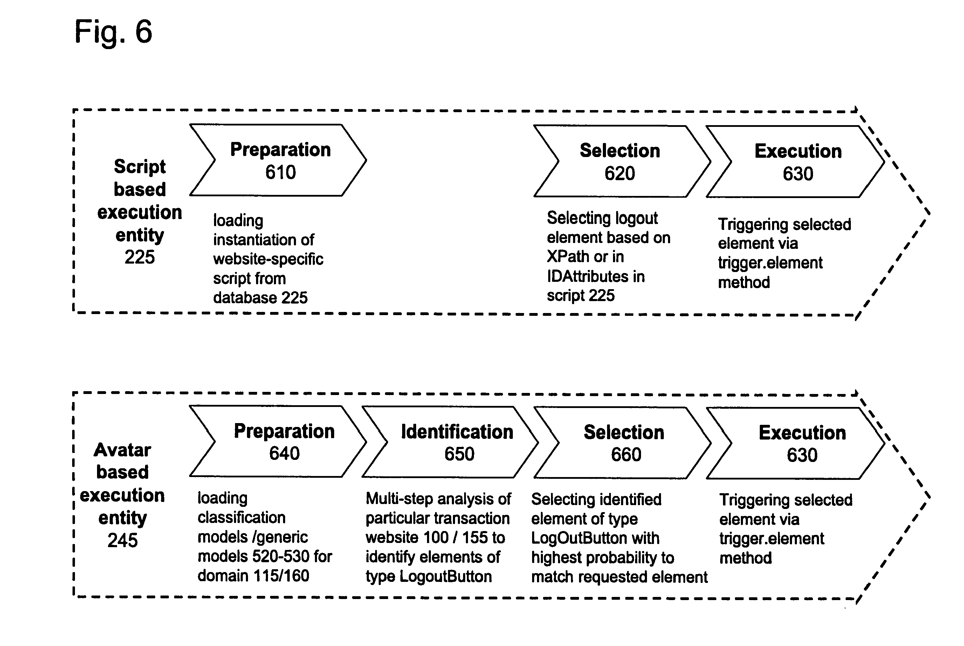

Figure 6 provides an illustrative example that schematically highlights the differences between script-based and avatar-based execution entities 225/245. The example of Figure 6 relates to the request for the transaction 310 of logging out of an online transaction website 100 / 155. Controller 210 maps the requested transaction 310 to one abstract transaction model 230, namely the transaction "dialogue end" 230. For the example in Figure 6, it is assumed that for this transaction "dialogue end" 230, two execution entities 225 / 245 are available, one script-based execution entity 225 and one avatar-based execution entity 245. In step 610 as preparation, script-based execution entity 225 loads an instantiation of a specific, namely website-specific script 625 from database 225. As outlined above, the script elements stored in database 225 are hardcoded static scripts customized for not only a specific domain 115 / 160 but also a specific transaction provider 110 / 150 and even the specific provider's specific web page 100 / 155.

In the illustrated example of Figure 6, script engine 225 loads a script module 610 from database 225 which is specific for the domain of banking 115, and moreover specific for a particular bank 100 that offers the user 130 to interact with its banking accounts via the institution's specific online banking website 100. By executing that bank-specific script 610, in step 620 the logout element is selected based on XPath or in IDAttributes in the script 610. At execution in step 630, the selected element is then triggered via a trigger element method. In contrast to that, the avatar-based execution entity 245 loads classification models and generic models 520-530 pertaining to the specific domain 115 / 160 for preparation. In the example of Figure 6, classification models and generic models 510-530 pertaining to the domain of online banking are loaded in step 640. As described above, in step 650, in a multi-step analysis of a specific banking website 100, elements are identified using the loaded domain-specific classification models 520-530 such that any of the identified elements has associated thereto an individual probability of actually representing an element of the type "logout button". In step 660, one of the identified elements of the type logout button is selected, namely the one of the identified elements that has the highest probability of representing the logout button and thus has associated thereto the highest priority. Similarly as before with the script-based execution entity, in step 630 a trigger element method triggers the selected logout button element.

As can be seen from this example, the avatar 280 operates without predefined selectors but instead, the loaded avatar script 245 operates to identify an element of the semantic-type "logout button" based on the above-described multistep analysis approach that uses domain-specific classification models 520 / 530. This multistep procedure in a first step filters elements found on a particular online transaction website 100 / 155, e.g. an online banking website 100 to identify only those elements which are clickable (as being "clickable" according to the domain-specific classification models 520 / 530 is one attribute of a logout button). In a next step, elements that are identified as being clickable (i.e. elements of the semantic-type clickable element) are further filtered using rules-based expressions and decision rules for identifying one or more elements (that pertain to the semantic-type clickable element) that conform to the requested element-type logout button. In some embodiments, this determination may not be performed in a binary way, i.e. classifying identified clickable elements as not pertaining to the type logout button (value 0) or representing a element logout button (value 1). Instead, based on the rule-based expressions and decision rules, a probability value is associated to each identified clickable element that is higher than 0 but smaller than 1 such that based on these probability values, any of the identified elements receives a priority which results in a priority hierarchy that allows for selecting one element of the highest priority, i.e. the highest probability value as described above.

For implementing the above described techniques, embodiments described herein distinguish at least three language levels. More particularly, in one embodiment a controller language level 218 is distinguished from a script language level 228 and an avatar engine language level 248.

The controller language level 218 allows for creating abstract transaction models 230 that are stored in database 230 and allow controller 210 to execute, delegate and/or supervise such abstract transactions 230. By using callback methods, controller 210 may interact with kernel 205 for communicating via transaction web service 250 with the user 130 operating computer application 260 to e.g. request the input of a PIN or a TAN number by that user 130. Any subtask 340 that may be delegated from controller 210 to any of the execution entities 225/245 is modeled as a black box within the abstract transaction model 230. Such subtasks 340 may for example address the input of a requested PIN into the respective template field of a respective banking website 100. Thereby, the language level of the controller 210 is isolated from the language level 228 / 248 of the script engine 220 or the avatar engine 280. Examples of the elements at the language level of a controller 210 may be for example to request a PIN, request a TAN, request query, or an executor activity. The following table illustrates some examples of elements at the language level of the controller 210 with their respective input and output parameters as used in an example implementation:

### Exemplary

| Language Element | Input Parameter | Output Parameter | Description |
|---|---|---|---|
| RequestPin | none | PIN: <string> | Requests PIN from user of computer application (260) |
| RequestTan | Which TAN is requested? | TAN: <string> | Requests a TAN from user of computer application (260) |
| RequestQuery | Structured representation of the question (LTQuery Callback-Request) | Structured representation of the answer (LTQuery Callback-Response) | Poses a security question to the user of computer application (260) |
| ExecutorActivity | Step: | none | Delegates a subtask identified |
| | <ExecutionStep> | | by the parameter <Step> to a registered execution entity |
| ExecutorActivity<T> | Step: <ExecutionStep> | Data: <T> The generic type T is specified at design time | Delegates a subtask identified by the parameter <Step> to a registered execution entity and expects to be handed back a data value of type <T> |
| ··· | ··· | ··· | ··· |

These however are only illustrative examples of elements at the language level of controller 210 and embodiments of the technique described herein may provide different and/or additional elements.

In embodiments described herein, such elements of the language level of the controller 210 may be managed with a derivation hierarchy that allows bundling cross-sectional functionality in a common class. As indicated by the above-described example elements, request PIN/request TAN, and request query elements request information from the user 130 operating on computer application 260 via transaction web service 250. In contrast, an executor activity operates as a generic connector between controller 210 and execution entities 225/245. This generic connector is instantiated at runtime with the declaration of a specific subtask 340 that has been predefined in one of the abstract transaction models 230. Before runtime, i.e. at design time, in that abstract transaction model 230, this specific subtask 340 is only statically specified as a type of subtask 340. Thus, at runtime, based on the subtask attribute, controller 210 can instantiate such predefined subtask type.

The language elements of the language level 228 of the script engine 220 are characterized by being solely able to interact with online transaction websites 100 / 155 by for example selecting elements, readout data and input data as well as triggering elements or loading URLs. To achieve that, any script stored in database 225 and any activity in each of these scripts 225 has permanent access to web browser 270. Thus, the specific language elements at the level of the script engine 220 use the options available at web browser interfaces. Some of these may be for example get.elements, analyze.table, and the like. The following table illustrates some examples of elements at the language level 228 of the script engine 220 with their respective input and output parameters as used in an example implementation:

| Exemplary Language Element | Input Parameter | Output Parameter | Description |
|---|---|---|---|
| GetElement | XPath: <string> or ID: <string> or X: <int>, Y: <int> | Element: <IElement> | Hands back an element that has been identified by the XPath, ID or the defined X/Y-coordinates |
| GetElementCollection | XPath: <string> or TagName: <string> | Elements: <IElement[]> | Hands an array of elements that has been identified by the XPath or tag name |
| GetElementAttribute | element: <IElement> attribute: <string> | Value: <string> | Hands back the value of the specified element's attribute |
| SetElementAttribute | element: <lelement> attribute: <string> Value: <string> | void | Sets the specified element's attribute to the specified value |
| LoadUrl | Url: <string> | void | Loads the specified URL |
| ClickElement | element: <IElement> | void | Triggers, i.e. clicks the specified element |
| EnterText | element: <IText> text: <string> | void | Enters the specified text into the specified GUI-element |
| MarkCheckbox | element: <ICheckbox> value: <boolean> | void | Marks or un-marks a checkbox depending on provided boolean parameter |
| SelectOption | element: <ISelect> value: <string> or text: <string> or index: <int> | void | Chooses an option based on the value attribute, text, or index |
| AnalyzeTable | RootPath: <string> ConfigId <string> | Result <Semantic Table> | Analyses a table of the rendered website based on a website-specific configuration and provides a structured outcome, the optional RootPath attribute |
| | | | limits the search on a section of the website |
| Analyzelmage | Area <Rectangle> ConfigId <string> Pattern <string> | Text <string> | Analyses the specified (image-)area of the website based on a website-specific configuration and an expected result. Herein, the pattern attribute can describe a regular expression |
| DownloadFile- ToStream | element <IElement> Timeout<int> | Content<Stream> | Triggers, by clicking the element, download of a file (e.g. a CVS file) while maintaining the timeout condition, the loaded content is provided as data stream for further processing |
| UpdateDocument | none | void | Initiates a manual re-wrapping of the presently rendered website |
| ValidateElement | element: <IElement>, name: <string> text: <string> value: <string> | void | Validates, whether the specified element holds the specified name, text, and / or value - if not, exception is reported |
| ValidateDocument | title: <string> | void | Validates, whether the present documents holds the specified title - if not, exception is reported |
| ··· | ··· | ··· | ··· |

These however are only illustrative examples of elements at the language level 228 of the script engine 220 and embodiments of the technique described herein may provide different and/or additional elements.

These elements at the language level of script engine 220, similarly as the language elements at the controller level 210, are managed in a derivation hierarchy that allows for bundling cross-sectional functionalities into common classes. For enabling controller 210 to supervise the execution of any delegated subtask 340, any language element at the script level 220 provides back a meaningful exception report in case of a failure or error. This exception indication in some embodiments described herein contains information on the present request, the present subtask 340 that had been delegated as well as the name and the ID of failed activity within the particular script 225.

The language level 248 of the avatar engine 280 describes a superset of the language level of the script engine 220. That means that for the language level 248 of the avatar 280, besides the avatar-specific language elements, all activities are also available that are described on the language level of the script engine 220 and can thus be used within the avatar workflows. This enables static scripts to be derived for script engine 220 from the dynamic workflows of the avatar engine 280. Elements of the language level of the avatar may for example be find.semantic.element, get.semantic.element, get.parent.area and the like. The following table illustrates some examples of elements at the language level 248 of the avatar engine 280 with their respective input and output parameters as used in an example implementation:

### Exemplary Language

| Element | Input Parameter | Output Parameter | Description |
|---|---|---|---|
| FindSemanticElement | Label: <GuiElement> or Area: <NavigationArea> Parent: <IAvatarElement> | Result: <IAvatarElement> | Hands back the, acc. to the domain-specific knowledge-base, best-matching element for the specified GUI- or navigation-concept on the presently rendered website |
| FindSemanticElements | Label: <GuiElement> or Area: <NavigationArea> Parent: <IAvatarElement> | Result: <IAvatarElement[]> | Hands back an array of the, acc. to the domain-specific knowledge-base, best-matching elements for the specified GUI- or navigation-concept on the presently rendered website |
| GetParentArea | Area: <NavigationArea> | Result: <NavigationArea> | Hands back, based on the navigation model, the parent concept to the specified area, used for automated navigation by avatar-based execution entities |
| GetlElement | Element: <lAvatarElement> | Result: <IElement> | Activity for breaking through the different levels of abstraction provided by the web-browser interface (270) |
| GetSemanticElement | Element: <IElement> | Result: <[AvatarElement> | Activity for breaking through the different levels of abstraction provided by the web-browser interface (270) |
| AnalyzeTable | RootPath: <string> Type: <TableContent-Type> | Result <SemanticTable> | Analyses a table on the presently rendered website based on the expected type of table and provides a structured outcome, the optional RootPath attribute limits the search on a section of the website |
| ··· | ··· | ··· | ··· |

These however are only illustrative examples of elements at the language level 248 of the avatar engine 280 and embodiments of the technique described herein may provide different and/or additional elements.

For modeling abstract transaction models 230, embodiments described herein use common input and output parameters. More particularly, any abstract model 230 will contain input and output parameters of the type callback, controller, request and response. While any abstract transaction model 230 will have the input/output parameters, their typification will be specific for any particular abstract transaction model stored database 230. As an illustrative example, for an abstract transaction model "dialog begin", the in/output parameter callback may have the argument type "dialog begin callback". The input/output parameter controller may have the argument type "controller", the input/output parameter type request may have the argument type "dialog begin request", and the input/output parameter response may have the argument type "dialog begin response". Thus, the parameters callback and request are handed over via the kernel interface 205 to abstract transaction 230. The response object in contrast is instantiated by controller 210 at the start of the execution of the particular transaction 230, in the above-described example the dialog begin at transaction 230. This response object will in course of the processing of the particular transaction 230 be manipulated and enriched with information by script-based execution entities 225 and/or avatar-based execution entities 245. The parameter controller provides a reference to controller 210 and is thus necessary for the delegation of subtasks 340 to registered execution entities 225/245.

Thus, a particular transaction model 230 maps an abstract interaction process 320 of a user 130 with a domain-specific transaction website 100 / 155 that results from an intended transaction 310 of that user 130. In the illustrative example of the transaction domain 115 / 160 pertaining to online banking, the transaction model 230 maps an abstract interaction process of a user that intends to interact with an online banking website 100 to conduct a banking transaction 310, for example a money transfer 310. This abstract transaction model 230 is designed to be compatible and valid for a maximum number of different transaction websites 100, i.e. in the case of the domain 115 pertaining to online banking for a vast number of different banking websites 100.

Thus, transaction models 230 in embodiments described herein are domain specific, taking into account different classes of transaction websites 100 / 155 for the initial development of these domain-specific transaction models 230. In the example of the domain 115 pertaining to online banking, thus different classes of online banking websites are analyzed to create such initial transaction models 230. As pertaining to the same domain, such online banking websites 100 within one particular class of online banking websites will have certain similarities in for example layout and interaction patterns. These classes may for example be constituted by different groups of banks 100 that may be built from strategic groups, consortia, co-operations, partnerships, types of banks and the like. The same considerations apply to other domains 160 and other groups of domain-specific online transaction providers 150.

Based on such initial domain-specific transaction model 230, further online transaction websites 100 / 155 may be checked with regard to the question of whether the developed transaction models 230 are valid, i.e. compatible with these websites 100 / 155, too. If this is not the case, the generic abstract transaction models 230 may be expanded in an iterative way in order to harmonize and stabilize the abstract domain-specific transaction models stored in database 230. For example, in the case of the transaction domain 115 pertaining to online banking, further banking websites 100 may be regarded which have not been associated with the initially regarded classes of banking websites 100.

Starting from the harmonized and stabilized transaction model 230, the granularity of the modeling of the activities 340 associated with any abstract transaction model 230 is determined based on the intended functionality of avatar engine 280. Here, the granularity of the abstract modeling of activities 340 within transaction model 230 is refined in order to reflect cognitive processes 320 of an imagined user 130 of a domain-specific transaction website 100 / 155, for example an online banking website 100. Besides these cognitive processes (for example, search for a button), also physical activities like observable interactions of the user with such domain-specific transaction website 100 (for example, triggering a previously identified button) are explicitly modeled. Using specific models of cognitive processes (for example, search and identification) and observable activities (for example, triggering) enables controller 210 to delegate activities necessary for conducting a requested transaction 310 via transaction model 230 on a fine granular level to avatar engine 280 in case an initially invoked script-based execution entity 225 has failed in executing some activity 340.

As an illustrative example, transaction model 230 for the above-described login transaction may contain the steps of:
Dialog Begin:
   (1) → Load website (Task: Controller.Tasks.LoadWebsite)
   (2) ← Request Pin
   (3) → Enter Login Data (Task Controller.Tasks.EnterLoginData)
   (4) → Find Login Button (Task: Controller.Tasks.FindLoginButton)
   (5) → TriggerLogln Button (Task: Controller.Tasks.TriggerLoginButton)

As indicated in the above example, a subtask 340 has been refined to a finer level of granularity to contain two activities, "find login button" (4) and "trigger login button" (5). The first one allows the triggering of an avatar-based execution entity 245 to deliver an element that is likely to represent a login button. The latter then initiates the triggering of that identified element which has been handed over as a parameter in the previously described step. In other words, by modeling the script-based execution entity 225 according to this granular level, in case the login button is not identified by execution of the scripts of the respective script-based execution entity 225 (i.e. activity "find login button" fails due to the position of the button having been changed at online transaction website 100/155), this subtask 340 can alternatively be further delegated by controller 210 to avatar engine 280 without avatar engine 280 or the respective avatar-based execution entity 245 being obliged to actually trigger an identified button.

Moreover, the subtask "request pin" (2) is a kernel activity at the language level 218 of controller 210 that is triggered by controller 200 at kernel interface 205 to request a PIN from the user 130 operating computer application 260. In contrast, subtask "load website" (1) and "enter login data"(3), "find login button" (4) and "trigger login button" (5) are executor activity elements at the language level 218 of controller 210. Thus, these elements from the perspective of controller 210 are black boxes as they are delegated to execution entities 225/245 registered via the capability matrix to the respective subtask 340. For any of these subtasks 340 representing executor activities, vendor 110 / 155 specific scripts 225 are coded. In other words, for any of the execute activity types of subtasks 340, at least one script 225 is developed / coded that is specific for one specific online transaction website 100 / 155 and one specific transaction provider 110 / 150. More particularly, for the example of the transaction domain 115 pertaining to online banking for any of these executor activity types of subtasks 340, at least one specific script 225 is developed and stored in database 225 for any specific bank 110 and the respective bank specific website 100.

Similar to the abstract transaction model 230, also any script in database 225 has input and output parameters. For a subtask 340 "enter login data", these input/output parameters may be, for example, browser, request, response, and task. Similar to the abstract modeling of transactions 230, also here the specific typification of the parameters request and response depend on particular transaction 230 that invokes respective script 225. Thus, scripts 225 that are used at several transactions 230 have their typification harmonized by way of a common super-set-lasses in order to prevent failures at runtime. The parameter browser provides a reference to web browser 270 which implements the rendering interface. The parameter task describes the presently to be fulfilled subtask 340 and thus contains again, input and output parameters. One input parameter may, for example, be the PIN of a customer operating a computer application 260. The output parameter may, for example, be a subsequently following further subtask 340, for example the previously described "find login button" subtask. This output parameter, in the example the to-be-searched login button is initially not filled. Thus, during execution of the script, these output parameters are filled in by other scripts in order to be executed successfully. Thus, in case of a failure, the respective subtask 340 is delegated to the avatar engine 280 in order to invoke an avatar workflow that as a backup solution fulfills the respective subsequently following subtask 340 and thereby fills in the respective output parameters of the initially executed script 225. Thereby, formalized data interfaces are defined between controller 210 and execution entities 225/245.

The parameter list of an avatar workflow differs from the parameter list of a script as described above by the additional specification of the avatar engine 280 responsible for the element classification. Also here abstract avatar workflows like, for example, a navigation task "goto" are reused in various abstract transaction models 230 and thus also here the definition of request and response parameters is rather general. Thus, the input/output parameter list of an avatar workflow 245 contains the same browsers, request, response, and task parameters as a script 225 for a subtask 340. In addition, however, parameter avatar is added that is an input parameter of the argument type avatar. Such avatar workflow implements a knowledge-based algorithm. As an illustrative example, a navigation task "goto" implements a knowledge-based algorithm for the automated navigation within a domain specific transaction website 100 155 based on the element classification processed by the avatar and further specific avatar activities, like for example, find.semantic.element, and/or get.parent.area. Further, such knowledge based algorithm considers typical human-like behavior patterns, like for example, search and interaction strategies on domain-specific websites 100.

An illustrative example e may illustrate operation of such knowledge based algorithms by illustrating activities resulting from a request generated at client application 260 to conduct a money transfer at a banking website 100. Accordingly, the operation starts at the landing page of banking website 100 that has been wrapped into the web browser interface 270. Based on that, the subtask 340 delegated to the avatar engine 280 is to navigate to the subpage on banking website 100 that provides the template for the money transfer. According to the navigation module, discussed further above, this subpage may be provided as a single transfer area. A suitable human behavior pattern in terms of a search and interaction strategy would now be to identify a link or a button that has the text "money transfer" on it and to subsequently click that button/link. Accordingly, the avatar workflow uses this approach in an analogous way and thereby aims to directly approach that target. Thus, the avatar based execution unit 245 searches for a navigation button, a concept that is represented by an abstract concept in the GUI model 530 as described above. This search activity is conducted by the avatar activity find.semantic.elements. In this illustrative example, it is assumed that in a first pass, this search fails and no matching element is found. As a consequence, avatar-based execution entity 245 will search for a more abstract target, i.e. not for a GUI element but a more abstract concept. This more abstract target is calculated by the avatar activity get.parent.area which traverses the taxonomy of the navigation model 520 to the next higher level. The actual target (navigation button to single transfer area) is stored at a suitable stack but as the new, more abstract target an account.area is identified in the next higher level of the taxonomy of the navigation model 520. As indicated in this example, the taxonomy is domain specific, in this illustrative example pertaining to the domain of online banking. Further, in this illustrative example, it is assumed that even at this higher level of the navigation model's taxonomy 520 also in this second pass, no matching navigation button is found and a further, third pass is initiated for which an again higher level of the navigation models taxonomy 520 is addressed, namely a banking.area. In this illustrative example, it is assumed that by aiming to identify a navigation button linking to a banking area, such navigation button is identified by a link that has a textual element "banking". Accordingly, this link is identified and triggered. In response to triggering the "banking" button, a new subpage of the online transaction website 100 is loaded and wrapped into web browser 270. Again, this new webpage is classified by the avatar 280 in order to proceed conducting the workflow of the presently executed avatar-based execution entity 245. Accordingly, again it is tested whether a navigation button can be identified that has a single transfer area as a target. If such element is now identified, for example by identifying a button that has the text "money transfer" on it, it is identified and handed back whereby the navigation task delegated to the avatar-based execution entity has successfully been conducted. If the avatar workflow cannot finish successfully, it stops with an exception report in case a cyclic operation is observed or no target on a next-higher abstraction level of the relevant taxonomy 520 can be identified.

Based on such a successfully processed avatar workflow, also previously failing scripts 225 or script parts may be repaired or rather newly generated in an at least partly automated way. For that, embodiments described herein comprise an interaction log that logs the processed workflow of an avatar-based execution entity 245. This interaction log allows for a detailed and automated reconstruction of which script 225 and avatar 245 activities have been performed and in which sequence or which parameters were used. In addition, definite, unambiguous mappings describe how a successfully processed avatar activity 245 is mapped into one or more script activities 245.

By replacing avatar activities in a recorded interaction log, the creation of an adjusted interaction sequence is thus enabled, said interaction sequence solely containing script activities as all avatar activities have been exchanged by respective script activities, according to the above-described unambiguous mappings. The resulting adjusted interaction sequence thus represents a script 225 that may now be invoked by script engine 220 to create exactly the same result as was previously achieved by a mix of script-based and avatar-based activities. However, as the avatar activities have been logged within a very narrow context, i.e. a specific transaction 310 and a specific activity on a specific website 100/155, this newly derived, automatically repaired script 225 may only be executable within the same very narrow context. This context, for example, may be determined by the account configuration of a customer where the interaction sequences have been recorded. The generalizing of the initially automatically repaired script 225 may still need developer input at the backend. Nevertheless, based on the avatar workflow, not only is a real-time fallback solution provided but also an automatically repaired script 225 is created that will at least be executable within the context it was initially created in.

Moreover, embodiments described herein contain features of interpreting online transaction websites 100 / 155 in order to identify and understand table-like structures. This interpretation is based on two steps of analysis, namely structural identification and content analysis. For the structural identification, the cognitive processes of human users emulated. Thus, this analysis is not performed on the level of HTML code of the respective transaction website 100 / 155 but rather on the rendering, i.e. the visual appearance of the website as this provides the level of information available to a respective user 130. Accordingly, the analysis takes into account, for example, boxy edges of rendered elements and searches for matrix structures typical for tables. The characteristics for identifying such table-like structures are rather soft conditions / rules. Thus, algorithms of the structural table identification are adapted in order to be able to identify a broad spectrum of tables of different domain-specific transaction websites 100 / 155, for example a broad spectrum of different banking websites 100. In an exemplary embodiment described herein, parameters to configure these soft rules for structural table identification may contain a minimal number of columns, a minimal number of rows, a horizontal offset in the determination of distance and alignment, vertical offset in the distance and alignment, maximum distance of rows, maximal of distance of columns, maximum size of cells and the like.

The results of these structural table identifications serve as inputs, i.e. the basis of content analysis. For this purpose, the identified table structures are reduced to types of tables that contain matching contents. In exemplary embodiments, as types of tables, the main specific types of tables are defined. For the example of the transaction domain 115 pertaining to online banking, for example table types for account overviews and the transaction list may be provided. Accordingly, for any of these predefined domain-specific types of tables, categories of content are predefined. In the example of the domain 115 pertaining to online banking, for the account overview table type, the predefined contents may be an account name, account number, a total sum, a currency, account type and the like. In order to identify these information types associated to a predefined table type, patterns are used that are predefined using characteristics of language, type of information, type of table cell, regular expression and form of interpretation. The latter determines how to process the content identified. Similar to the above-described table structure identification, the content analysis may also be configured via parameters in order to adjust the analysis to the appearance characteristics of a typical online transaction website 100 / 155 pertaining to the respective domain 115 / 160. Such parameters may be, for example, the filtering of boldly printed text, the assumption that a header is present, column information for content types, inevitability of existence of certain content types, and the distribution of information pertaining to one table entry on several cells. Based on this, some standard patterns as well as customized patterns for specific online transaction websites 100/155 may be defined. In the illustrative example of the transaction domain 115 pertaining to online banking, for example, customized patterns for content analysis may be defined that are customized to specific online banking websites 100 provided by particular banks 110. In the embodiments described herein, the customization of these parameters for the identification of table structures and content may be performed by way of a configuration template. Embodiments described herein may thereby allow the visual observation of the impact of changes to parameters on the identification of table structures and the analysis of extracted information. Thus, an optimized configuration can be easily achieved and stored in a configuration library together with a relation to the specific transaction provider 100 that the parameter set has been customized for to robustly identify tables and contents.

This configuration library may then be used by script engine 220 as well as avatar engine 280. Because of fundamentally different ways of working, script engine 220 works with static scripts while avatar engine 280 works with knowledge-based algorithms, both use the configuration library but use it in a different way.

More particularly, script engine 220 uses the identification of tables as a quick option to identify information from an online transaction website 100 / 155 without significant effort. In doing so, script engine 220 omits the iteration of XPaths and can read out information directly from HTML code. In order to achieve this, the visually customizable configuration of the table structure identification is customized with matching parameters which is then directly related to by script-based execution entities 225 which then further process the extracted data which has been extracted based on the content analysis described above.

The avatar 480, however, uses the increasing number of parameter configurations that have been created for the script-based execution entities 225 rather as an increasing number of exemplary configurations which are used by avatar-based execution entities 245 for analyzing banking websites for which no (working) scripts yet exist. Thus, an avatar-based execution entity 245 that is delegated with the sub-task of extracting account information or a transaction table on a yet unknown online banking website 100 will rely, in the first step, on the already known configurations of parameters for table identification and content analysis. The results of such analysis will vary in quality and quantity depending on which configuration has been applied. Accordingly, the avatar-based execution entity 245 will compare the results of the table structure identification and content analysis based on quality and quantity of extracted information in order to select the best outcome for further processing.

For the automated filling in of transaction templates, avatar-based execution entities need to correctly identify template fields and information. This identification regards active, to be manipulated template fields and also their static, not to be manipulated, labels. In order to perform said identification, avatar-based execution entities again apply a multi-step procedure of classifying the template element in order to identify template fields and label elements. In embodiments described herein, this is achieved by initially analyzing the rendered website 100 / 155 in order to identify key words that are provided from patterns determined by regular expressions. In a next step, based on the identified labels, input fields of the template are searched for which, based on their positioning on the respective online transaction website 100 can be associated to identified labels. This simulates the cognitive process of the human user who will develop an understanding of the template based on the spatial positioning of template elements and the expressions used in labels.

To further enhance the script-based and avatar-based execution entities 225 and 245 capabilities for extracting information and syntactic website elements on online transaction websites 100, a further specialized activity analyze.image is provided with embodiments described herein. This activity is provided with a section of the website 10 / 155 rendered in web browser 270 and further with a parameter configuration of the underlying algorithm. Based on that, the section of the online transaction website 100 / 155 will be analyzed based on optical character recognition technology (OCR) and the identified text is handed back to the respective execution entity 225/245. In order to customize the respective parameter configuration also here a specialized editor is provided that allows creating such OCR configurations. Similar as in the table structure identification configurator, also here a live preview is provided that allows for observing the impact of changes in parameters on the quality of the OCR performance. This increases usability and supports creating an optimal parameter set for the OCR interpretation of website sections pertaining to specific online transaction websites 100 / 155, for example one specific banking website 100 provided by a specific banking institute 110. Similar to the previously described configurations on parameters for table structure identification, also here the parameter set configured for a specific context can be serialized and stored for retrieval during processing of abstract transaction models 230 which will induce that registered subtask 340 will invoke this specialized analyze image activity with the respective parameter configuration suitable for then present context. In order to further adjust and filter the recognized text, regular expressions are used.

Thus, system 200, by seamlessly mixing script-based and avatar-based execution entities, implements an intelligent web robot that allows for automated interaction with domain specific online transaction websites 100 / 155. As described in various examples, this technique for example may be applied for automated interaction with online banking websites 100 where the transaction domain 115 pertains to online banking. Based on semantic screen scraping that robustly interprets the visual appearance of a respective online transaction website 100 / 155, a knowledge-based simulation of user interaction which such online transaction website 100 / 155 is implemented that uses a situation aware context based task assignment by controller 210. This allows implementing an easy to use efficient and robust automated interaction with a browser based online transaction website 100 / 155 for automated conducting of domain specific transactions. In the example of the transaction domain 115 pertaining to online banking, this allows a user to govern based on a third party computer application 260 various online banking accounts which are automatically interacted with using system 200 as a proxy between computer application 260 and the respective online banking websites 100. Thus, system 200 provides computer application 260 with the capability for automated conducting of online web transactions, for example online banking transactions. These capabilities are robust and downtimes are reduced to a minimum and are in most cases avoided at all as any failing script-based execution entity 225 is backed up with an avatar-based execution entity 245 that provides for almost all situations are reliable fallback solution that provides controller 210 from stopping the execution of a requested transaction 310.

The embodiments described herein thus operate on the visually rendered website 100 / 155 that has been wrapped into a web service with a defined interface. Thereby system 200 is enabled to not only extract information from the rendered website 100 / 155 but also to interact with the rendered website in an automated way using the specifically implemented web browser 270. Implementing the knowledge-based avatar engine 280 further allows for implementing in the avatar-based execution entities 245 search and interaction patterns that work analogously to a human being interacting with a specific website 100 / 155, rather than analysing the syntactic source code of such website 100 / 155.

This enables not only to analyze and interpret the visual presentation of website content, but also to learn from applying interaction metaphors and patterns. Using a multistep approach, system 200 iterates between executing in the one extreme position hard coded, static scripts 225 customized for a specific context and website 100 / 155 and, on the other end, knowledge-based avatar workflows 245 that are generalized thereby reducing coding effort but increasing processor effort to perform the abstract classification and interpretation tasks. However, while performance of a system 200 while executing avatar workflows 245 may suffer, robustness is provided as - even if slower - still controller 210 is enabled to continue executing a requested transaction 310 even in the case that the specialized script 225 may fail. Thus, system 200 dynamically balances efforts for programming/hard coding scripts 225 at design time with efforts of performing cognition oriented tasks at run time of executing system 200.

As described above, system 200 dynamically switches script orientation (high programming effort) with knowledge orientation (avatar workflow inducing high cognition efforts on a computer system) seamlessly based on deciding, for any activity in any subtask 340 derived from an abstract transaction model 230, whether it can successfully be executed using a script-based execution entity 225 or an avatar-based execution entity 245. This allows a flexible and robust conducting of requested transactions, which is ensured by the controller component 210 seamlessly mixing available script-based execution entities 225 and avatar-based execution entities 245 processing requested transactions 310. The abstract transaction models 230 are built from abstract subtasks 340 that have associated thereto several execution entities 225 / 245 each of them either realizing a script-based or an avatar-based approach. Thus, the script engine 220 and avatar engine 280 provide execution entities 25 / 245 for controller 210 which uses a web service 250 to communicate with a third party application software 260.

Controller 210 implements a very fine granular controlling of single execution entities 225 / 245 by employing a capability matrix that associates to any execution entity 225 / 245 information about which subtask 340 can be performed by the particular execution entity 225 / 245 and on which website 100 of a specific provider 110 this subtask 340 can be executed (white list) and which subtask 340 may not be executed or on which webpage the particular subtask 340 may not be executed by the particular execution entity 100 / 155 (black list). Moreover, any execution entity 225 / 245 is associated an invocation priority which is different for any two or more execution entities 225 / 245 associated to the same particular subtask 340. Thereby, it is ensured that to any point in time, for any subtask 340 there is one execution entity 225 / 245 that has the unique highest invocation priority for executing the particular subtask 340.

Accordingly, controller 210 will initially direct the execution of a subtask 340 to the execution entity 225 / 245 that has been registered with the subtask 340 with the highest invocation priority. In some embodiments, per default the execution entity 225 with the highest invocation priority will be a script based execution entity 225. However, if that execution entity 225 cannot successfully execute the respective sub task 340 or if while performing the subtask 340 a failure occurs, the controller 210 will redirect the subtask 340 to an execution entity that has the next lower invocation priority and will delegate execution of the respective subtask 340 to a execution entity 245 with a next lower invocation priority. In some embodiments, per default the execution entity 245 with a next-lower invocation priority may be an avatar-based execution entity 245. Thereby, an escalation mechanism is established that ensures for robustness in terms of the execution of an abstract transaction model 230 being failure proof as the controller 210 is enabled to forward and repair the failing script workflow by delegating a subtask 340 to an alternative execution entities 245 of lower invocation priority but higher robustness at runtime.

Moreover, an automated adaption capability is provided as the controller, in response to a failing subtask 340 delegation, will adjust the capability matrix by accordingly updating the information registered with execution entities 225 / 245. This, at least temporarily, provides a bug fix that can later be checked by a developer in order to generalize a new solution.

In order to further increase robustness of the created scripts even when facing syntactic changes on respective online transaction websites 100 / 155, these scripts and their activities act on the basis of semantic and visual information in the document object model tree (DOM tree) of the respective online transaction website 100 / 155 rather than the sheer syntax of the underlying HTML code. As described above, for achieving that, procedures are provided that interpret a respective domain specific online transaction website 100 / 155 based on visual and semantic information in order to identify and understand templates and/or table-like structures, to extract and interpret respective information without necessarily the table-like structures being available in HTML table form.

As a back up solution, avatar engine 280 follows a knowledge-based approach for execution of subtasks 340 that is based on semantically lifting the respective online transaction website 100 / 155 using domain-specific classification 520-530. This interpretation maps syntactic data onto semantic and domain-specific concepts 520-530, for example, concepts pertaining to the domain 115 of online banking. Based on that, a delegated subtask 340 will be processed on a rather abstract concept level of the underlying online transaction website 100 / 155. As described above, specialized avatar activities 245 implement these operations. The elements of the language level 248 of avatar engine 280 therefore are more or less orthogonal to the language level 218 of controller 210, while at the same time providing a superset of the language level 228 at script engine 220. Thus, avatar activities can also map into script activities. This provides for at least partly automated fault repair of failing 225 scripts based on successful avatar workflows.

Thus, a hybrid approach is provided that allows for a flexible automated conducting of transactions on online web transaction websites 100 / 155 using alternative execution entities 225 / 245 which are either script or knowledge-based. As described above, a context sensitive selection of generality and intensity of cognitive understanding in terms of the domain specific models 510-530 and process models 230 is implemented to provide automated browser based transactions. These procedures operate to provide content identification, table structure identification, domain-specific template identification, OCR and image interpretation as well as an understanding of typical interaction metaphors and patterns which are used to build an adaptive capability matrix for execution entities. Thus, robustness, adaptability and flexibility is provided since, at the one end universal semantic approaches robustly cover almost all interaction scenarios in a defined domain 115, whereas at the other end few still occurring exceptions may be covered by way of using customized, i.e. specialized scripts 225.

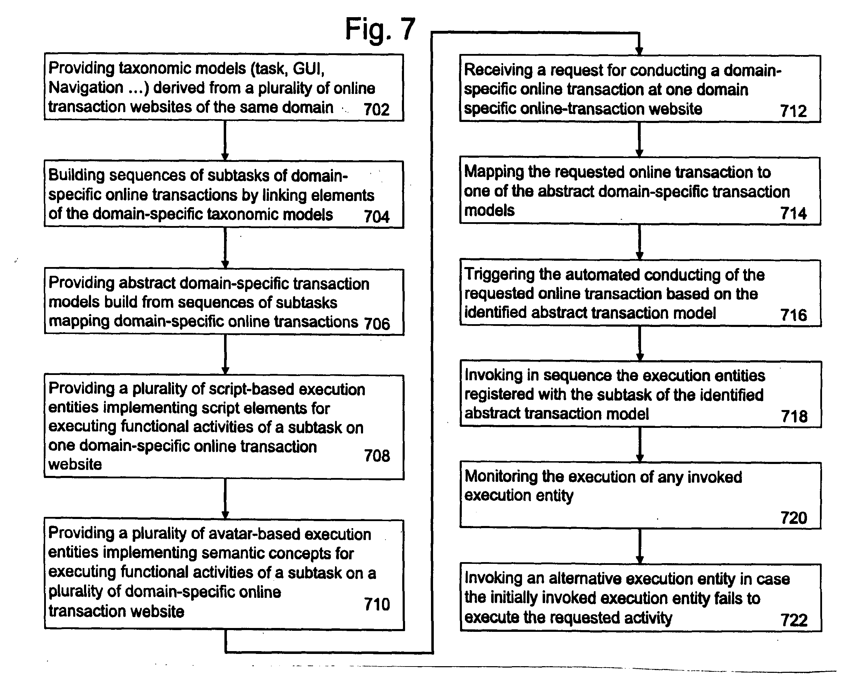

Figure 7 schematically shows an exemplary sequence illustrating examples of procedures performed with the system 200. In step 702, a plurality of taxonomic models (task, GUI, Navigation ...) 510 - 530 is provided as derived from a plurality of online transaction websites 100 / 155 of the same domain 115 / 160. In step 704, domain-specific sequences of subtasks 340 of domain-specific online transactions by linking elements of the domain-specific taxonomic models 510-530 are provided. In step 706, abstract domain-specific transaction models 230 are build from sequences of subtasks 340 mapping domain-specific online transactions. In step 708, a plurality of script-based execution entities 225 implementing script elements for executing functional activities of a subtask 340 on one domain-specific online transaction website 100 / 155 is provided. In step 710, a plurality of avatar-based execution entities 245 implementing semantic concepts for executing functional activities of a subtask 340 on a plurality of domain-specific online transaction website 100 / 155. In step 712, a request for conducting a domain-specific online transaction 310 at one domain specific online-transaction website 100 / 155 is received. In step 714, the requested online transaction 310 is mapped to one of the abstract domain-specific transaction models 230. In step 716, the automated conducting of the requested online transaction 310 is triggered based on the identified abstract transaction model 230. In step 718, the execution entities 225 / 245 registered with the subtask 340 of the identified abstract transaction model 230 are invoked in sequence. In step 720, the execution of the invoked execution entities 225 / 245 is monitored. In step 722, an alternative execution entity 225 / 245 is invoked in case the initially invoked execution entity 225 / 245 fails to execute the requested activity of the subtask 340.

In an example implementation, system 200 pertains to the specific domain of banking transactions. In that sample implementation, transaction models 230 pertain to the domain of web-based banking. In that example implementation, controller 210 is further configured for categorizing transactions, i.e. banking and transactions performed using system 200. However in alternative implementations, that categorization nmay also be performed by way of the third party application 260.

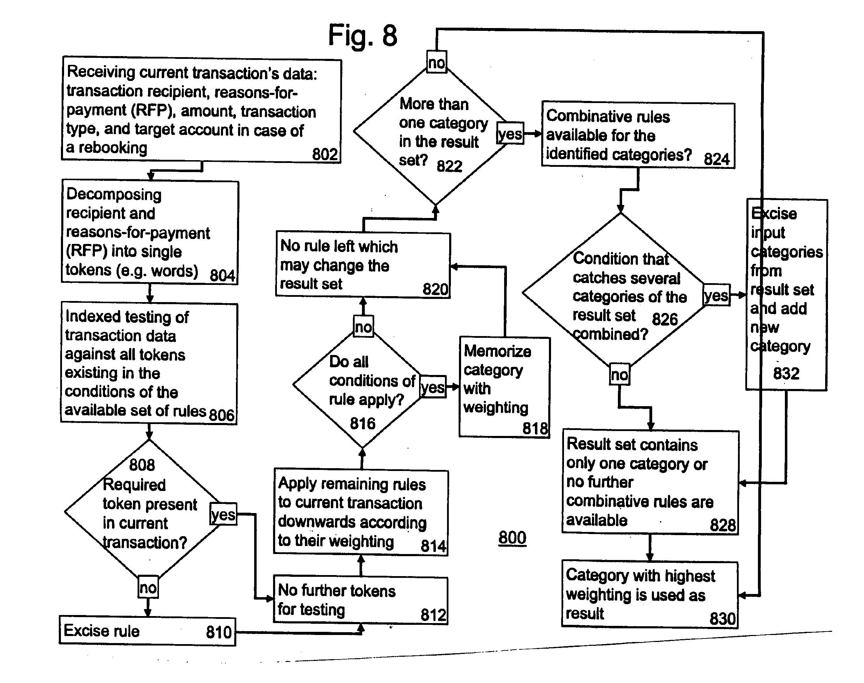

The aim of such automated categorization of a transaction 310 is to associated a performed transaction 310 to one of a number of defined categories of transactions 310 in order to enable a further analysis of the overall transaction flow managed by system 200. More particularly, in that example implementation, controller 210 is configured to perform an automated categorization for any transaction 310 performed as a banking transaction 310 with via system 200. Based on that automated categorization, any money transaction is associated to one of a number of defined categories with a larger necessity to manually intervene, for example by manually assigning respective categories. In order to achieve that, in an example implementation, controller 210 provides a self-learning categorization mechanism that identified patterns in manual categorization performed by a user 130 operating at application 260. Figure 8 shows an example of a sequence of steps performed in order to implement such self-learning auto-categorization.

In that example, the auto-categorization is performed on the basis of a single, i.e. the current transaction 310. This transaction 310 is handed over with its data to the respective rules stored with either third party application n260 and / or controller 210. These rules are applied to a current transaction 310 in order to automatically associate one of a number of predefined categories to that transaction 310.

As indicated in Figure 8, in a first step 802, the current transaction's 310 data is received, for example the transaction's recipient, the reasons for payment, the transaction amount, the type of transaction in a case of re-booking, the target account. The type of transaction may for example be a money transfer, a loan payment, a direct debit and the like.

As indicated in Figure 8, this data is processed in a two-step auto-categorization in order to automatically assign one of a number of predefined categories to that current transaction 310.

In a first step, the text of the reasons for payment field and the name of the transaction's recipient is decomposed in step 804 in order to identify single words that can further be used as single tokens in the processing of the categorization engine. Based on that in the first part of the sequence of steps for the auto-categorization, it is tested which of the predefined categories generally may be applicable to the current transaction 310. For that, in an example implementation, an indexed test is performed on the decomposed transaction data against all tokens existent in the conditions of the available set of rules in step 806. Accordingly, in step 808, it is tested whether a required token of any of the conditions of a given rule is present in the data of the current transaction 310.

In case the required token is not present in the current transaction's data, this means that the respective rule does not apply and it is accordingly excised in step 810 from the result set. Accordingly, in an example implementation test 808 is repeated until no further tokens of the current transaction 310 are available for testing and / or no further rules or rather conditions of rules from the available set of rules are further to be tested. Instead, any rule for which a required token can be identified in step 808 is added to a preliminary results set (until there is no further token and /or rule to be tested) in step 812. The rules of this preliminary result set of remaining rules is applied to the current transaction in a sequence downwards according to their respective weighting in step 814. In that applying of the rules, it is tested in step 816 for any of the remaining rules whether all of the conditions pertaining to a respective rule apply to the current transaction 310. If the test 816 successful, i.e. if of a given rule all conditions apply to the current transactionn310, the respective category pertaining to said rule is memorized with the weighting of the rule in step 818. In an example implementation, this testing in step 816 is repeated until there is no rule left, which may change the result set. Or in other words, this testing is repeated for all rules of the preliminary results set.

Thus, Figure 8 illustrates that auto-categorization in a first part identifies those rules from the available set of rules that in a broader sense may generally apply to the current transaction - but not necessarily are precisely the "right" or "best-matching" categories. The thereby initially identified categories, i.e. the categories corresponding to the remaining rules, are associated to a preliminary results set with their corresponding weighting. This association as illustrated in Figure 8 is performed based on a comparison of the decomposed data of the current transaction 310 using, for example, text comparisons based on the decomposed tokens, regular expressions, and also mathematical comparisons with regard to the transaction amount (i.e. greater than, less than, equal ...). In an example implementation, the text comparison is performed, for example, on the basis of operators like "starts with", "matches to", "contains" and the like. As will be appreciated, also others and in particular further and alternative methods of fuzzy comparison may be applied.

In a second part, following those comparisons, further rules from an additional and / or the same set of rules are executed to enable the combining of categories that have been associated when applying the preliminary results set as described above. Accordingly, a first part of the automated categorization (identifying generally applicable categories) ends with step 820 where there is no rule left which may change the result set.

Following that, in step 822, it is tested whether there is more than one category in the results set created in the first part, i.e. in steps 802 to 820. If there is only one category, i.e. if test 822 is negative, this category is applied to the current transaction.

If however in step 822 there is more than one category found in the preliminary result step created in steps 802 to 820, in step 824 combinative rules are applied that are available for the so-far-identified categories in the process of auto-categorization. Based on that, in step 826, it is tested whether there are conditions in the combinative rules that catch several categories of the categories in the preliminary results set, combined. If such condition or rule can be identified, the respective input categories, i.e. the input categories that caught by the rule / condition combined, are excised from the results set and instead a combinative category is added to the result set (in exchange for the excised categories).

As an example, the preliminary results set may contain the two categories of "tax" and "car". One of the available rules may combine these two categories into a combinative category "car tax". In that case, the new combinative category "car tax" would be added to the final results set and instead the initial input categories "tax" and "car" would be excised in exchange for the new category "car tax".

This test of retrieving combinative rules in step 824 and applying those rules in step 826 to add combinative categories to the results set in step 832 is repeated until no further condition is available that catches several of the categories of the preliminary result set created in step 820 combined. Accordingly, in step 828 the result set either contains only one category or no further combinative rules are available that may allow for combining several categories in the results set to a new combinative category. In step 830, finally the weighting of the categories left in the result set is tested in order to apply the one category of the remaining categories with the highest weighting as the final result of the auto-categorization to the current transaction 310.

As illustrated in Figure 8, in the second part of the sequence of steps of auto-categorizing banking transaction 310, rules are processed that combine categories from the preliminary results set into new combinative categories. In an example implementation, conditions may apply that define as input conditions which categories with which minimum weightings have to be present in the preliminary results set in order to have the respective rule apply to these categories. Accordingly, if this condition applies, the respective combinative rule applies and allows to add a further combinative category to the results set and to excise the respective input categories as illustrated in step 832.

Thus, Figure 8 illustrates a self-learning mechanism of auto-categorization for banking transactions 310 that analyses each single online-banking transaction 310 initiated by user 130 and associates any of these transactions 310 to one of a number of predefined categories.

However, in case a particular transaction may not successfully be categorized, i.e. the auto-categorization sequence may not identify a matching category, a user may also manually assign a given category to that transaction.

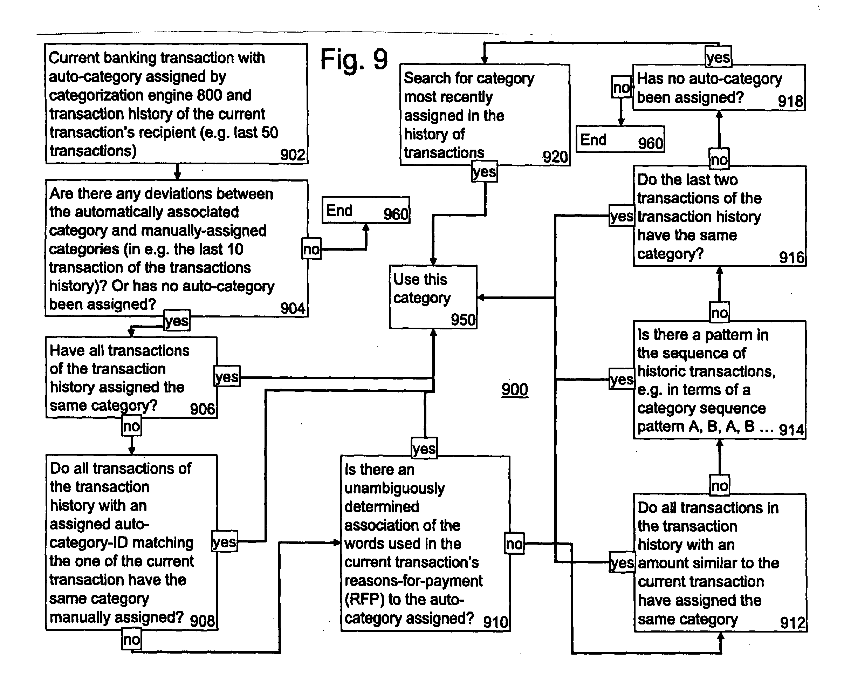

Figure 9 illustrates an exemplary sequence of steps that highlights a controller 210 and / or application 260 being further be configured for improving reliability of an auto-categorization technique, for example the one illustrated in Figure 8. In an example implementation, this enhanced auto-categorization additionally takes into account manual associations of categories provided by a user 130 based manual intervention by the user 130.

In the example implementation of sequence 900, the self-learning mechanism starts with the input data of the current online-banking transaction 310. For that online-banking transaction, a category may have bee assigned using auto-categorization. This auto-category may for example have been assigned based on the auto-categorization sequence 800 illustrated in Figure 8. In addition, a history of transactions of the current transaction's recipient is provided as input for sequence 900, for example, the last 50 transactions in order to improve accuracy of auto-categorization.

After the initial data input step 902, on the basis of the transaction history data it is tested in step 904 whether in the past (i.e. in the provided history of transactions) there have been deviations between the automatically-associated categories (i.e. the auto-categories assigned based for example on a sequence like the auto-categorization sequence 800) and manually-assigned categories (i.e. manual categories assigned by user 130) in, for example, the last ten transactions of the history of transactions. In other words, it is tested in step 904 whether the categories that have been manually assigned by a user 130 deviate from categories that have been assigned with e.g. auto-categorization engine 800. As a similar test, in the same step 904, it is tested whether any auto-category has been assigned to the current transaction at all. In both cases, i.e. if there was no deviation in past (meaning the auto-categorization has been robust for the particular transaction recipient is robust), or if no auto-category has been assigned to the current transaction 310 in e.g. a sequence 800, the sequence 900 ends in step 960.

If there have been deviations in the past and an auto-category has been assigned, in step 906 it is tested whether all transactions in the history of transactions provided as input of the same transaction recipient are assigned to the same category. If the test 906 is positive, this same category is applied to the present transaction 950 and sequence 900 ends.

If the test 906 was negative, in a next step 908 it is tested whether all transactions in the transaction history that have an auto-category assigned with an auto-category ID that matches the one that has been assigned to the current transaction 310, have one and the same category manually assigned by user 130. In other words, in step 908 it is tested whether all transactions in the history of transactions that have (based on e.g. auto-categorization sequence 800) associated thereto the same auto-category have also been assigned (a perhaps deviating) identical category based on manual intervention by user 130. If the test was positive, this identical, manually-assigned category is applied in step 950 and sequence 900 ends.

If the test was negative, in a next step 910 it is tested whether there is an unambiguously-determined association of the words or rather tokens used in the current transaction's reason-for-payment text field to the assigned auto-category. If that test is positive, again this category is finally assigned to the current transaction in step 950 and sequence 900 ends.

If the test was negative, in step 912 it is tested whether all transactions in the transaction history that have a similar transaction amount as compared to the current transaction's 310 amount have assigned thereto the same category. If such regular amount for transactions can be identified, i.e. a transaction amount for which regularly the same category is assigned and a similar transaction amount is identified in the current transaction 310, this category is applied to the current transaction in step 950 and sequence 900 ends.

If that test was negative, in step 914 it is tested whether a pattern of categories can be identified in the sequence of historic transactions. Such pattern would for example be extrapolated in order to derive from such category sequence pattern the category of the present transaction which would be assigned to the current transaction again in step 950 and sequence 900 ends.

If test 914 cannot identify such a pattern, in a next step 916 it is tested whether the last two transactions of the transaction history have assigned thereto the same category. If that is the case, this category is assigned to the current transaction in step 950 and sequence 900 ends.

Finally, if text 916 was negative, in step 918 it is tested whether there have been assigned any auto-category to the transactions in the transaction history. If that was not the case, again the sequence stops in step 960. If an auto-category has been assigned, in step 920 it is searched for the category that has most recently been assigned to a transaction in the history of transaction. This identified, most-recent category is again used in step 950 to be assigned to the current transaction 310 and sequence 900 ends.

Thus sequence 900 illustrates a self-learning capability that may be added to an auto-categorization engine 800. This post-categorization and re-categorization of current transactions as illustrated in the example implementation of Figure 9 allows for increasing the robustness of an auto-categorization engine, e.g. the auto-categorization engine 800. The self-learning mechanism illustrated in sequence 900 may be used for allowing future transactions to be automatically categorized in an even more reliable way. Although no new rules are created, still the auto-categorization engine is rendered with self-learning capabilities based on history data. This may be used to identify a matching pattern in the history of transactions that may comply with the characteristics of the present transaction in order to derive a matching category from there.

In an example implementation, the self-learning sequence 900 may be limited to the scope of the recipient / target of a current transaction 310. Based on that focus, in example implementations; the self-learning sequence 900 may be executed only in case an auto-categorization engine 800 fails to create an automatically-created assignment of a predefined category to a current transaction 310 or, for example, in case a user 130 corrects a share of automatically-assigned categories above a predetermined threshold (of e.g. 20% or more).

Thus, the solution provides a situation-aware context related reaction by explicit modeling of domain-specific knowledge and processes. Thereby, flexible and adaptive automated conducting of transactions with online transaction websites 100 is provided, which is robust due to various levels of escalation that ensures instant error recovery at run time. Besides this robustness and failure-proofness, the partly automated error repair further provides for a quick elimination of errors once they occur.

All of the US patents, US patent application publications, US patent applications, foreign patents, foreign patent application and non patent publications referred to in this specification and/or listed in the application data sheet are incorporated herein by reference in their entirety.

From the forgoing and further it will be appreciated that, although specific embodiments have been described herein for purposes of illustration, various modifications may be made without deviating from the sprit and scope of the present disclosure. For example, the methods, techniques, computer-readable medium, and systems for providing intermediary based transactions discussed herein are applicable to other architectures and other system architectures depicted. Also, the methods, techniques, computer program products, and systems discussed herein are applicable to differing protocols, communication media (optical, wireless, cable, etc.) and devices (such as wireless handset, electronic organizers, personal digital assistants, portable email machines, game machines, pagers, navigating devices such as GPS receivers etc.).

## Claims

1. A computer-implemented system for automated conducting of domain-specific online transactions by automated interacting of the system with a domain-specific online transaction website to conduct requested online transactions, the system comprising:
at least one transaction model database storing a plurality of domain-specific abstract transaction models, each transaction model comprising a sequence of subtasks comprising one or more functional activities to be performed for conducting an online transaction on online transaction websites pertaining to one domain, the subtasks being build from linking elements of one or more shared taxonomic models of a plurality of online transaction websites, each of the plurality of online transaction websites pertaining to the one domain;
at least one script engine comprising script-based execution entities, each script-based execution entity adapted and registered for executing one or more functional activities of one or more subtask on at least one of the plurality of online transaction websites based on one or more script elements,
at least one avatar engine comprising avatar-based execution entities, each avatar-based execution entity adapted and registered for executing one or more functional activities of one or more subtasks on the plurality of online transaction websites based stored domain-specific knowledge;
a controller adapted for receiving a request for conducting an online transaction pertaining to the one domain on one of the plurality of online transaction websites, the controller being adapted for triggering the automated conducting of the requested online transaction on the one online transaction website based on mapping, in response to the request, the requested online transaction to one of the plurality of abstract transaction models and invoking in sequence the execution entities executing the functional activities of the sequence of subtasks of the mapped abstract transaction model, wherein the controller monitors the execution of any invoked execution entity to invoke an alternative execution entity in case an initially invoked execution entity fails in executing a functional activity on the one online transaction website.

2. The system of claim 1 wherein the shared taxonomic models comprise at least a task model, a navigation model and a GUI model, each of the models being specific to the one domain.

3. The system of any of claims 1 and 2, wherein the stored knowledge is build and codified based on rules, regular expressions, interaction patterns, workflows and search strategies reflecting interaction patterns and strategies of a human user conducting a domain-specific transaction via a web browser on an online transaction website pertaining to the one domain.

4. The system of any of claims 1 to 3, wherein each avatar-based execution entity is adapted to operate on semantic concepts specific to the one domain by interpreting the visual appearance of the one of the plurality of online transaction websites using domain-specific classifications to map syntactic data of the one online transaction website to the domain specific semantic concepts.

5. The system of any of claims 1 to 4, further comprising
a transactional web service that acts as interface between the controller and a computer application operated by a user, the computer application requesting online transactions pertaining to the one domain on one of the plurality of online transaction websites, the controller receiving the request and handing back the response from conducting the requested online transaction back to the computer application via the web service interface.

6. The system of any of claims 1 to 5, further comprising
a web browser component adapted for loading and rendering an online transaction website to wrap the website into a lightweight document object model, DOM, such that the script engine as well as any script element during execution has access to the loaded and rendered one of the plurality of online transaction websites via the web-browser component to interact with the one online transaction website and / or derive from the one online transaction website semantic and visual information based on the DOM tree of the online transaction website.

7. The system of any of claims 1 to 6, wherein each one registered execution entity has associated an invocation priority, said invocation priority being unique for any execution entity being registered for one particular subtask, wherein the controller is adapted to invoke execution entities according to their unique invocation priority and the controller re-directs a request to an execution entity with a next-lower invocation priority in case an initially invoked execution entity with a higher invocation priority failed in execution of the requested functional activity.

8. The system of any of claims 1 to 7, wherein the one domain pertains to online banking and the plurality of online transaction websites pertaining to the one domain are a plurality of online banking websites.

9. A computer-implemented method for automated conducting of domain-specific online transactions by automated interacting of the system with a domain-specific online transaction website to conduct requested online transactions, the system comprising:
providing a plurality of domain-specific abstract transaction models, each transaction model comprising a sequence of subtasks comprising one or more functional activities to be performed for conducting an online transaction on online transaction websites pertaining to one domain, the subtasks being build from linking elements of one or more shared taxonomic models of a plurality of online transaction websites, each of the plurality of online transaction websites pertaining to the one domain;
providing a plurality of script-based execution entities, each script-based execution entity adapted and registered for executing one or more functional activities of one or more subtask on at least one of the plurality of online transaction websites based on one or more script elements,
providing a plurality of avatar-based execution entities, each avatar-based execution entity adapted and registered for executing one or more functional activities of one or more subtasks on the plurality of online transaction websites based stored domain-specific knowledge;
receiving a request for conducting an online transaction pertaining to the one domain on one of the plurality of online transaction websites;
triggering the automated conducting of the requested online transaction on the one online transaction website based on mapping, in response to the request, the requested online transaction to one of the plurality of abstract transaction models;
invoking in sequence the execution entities executing the functional activities of the sequence of subtasks of the mapped abstract transaction model;
monitoring the execution of any invoked execution entity to invoke an alternative execution entity in case an initially invoked execution entity fails in executing a functional activity on the one online transaction website.

10. The method of claim 9, wherein each script element is implemented as a hard-coded script that when invoked by the controller operates to execute at least one functional activity at one particular of the plurality of online transaction websites.

11. The method of any of claims 9 and 10, further comprising
maintaining a capability matrix, the capability matrix registering to each sub task one or more execution entities, each one registered execution entity having associated information indicating on which of the plurality of online transaction websites the one registered execution entity can execute which functional activities of the subtask it is registered to.

12. The method of claim 11, further comprising
adapting, at least in part automatically, the capability matrix in case a script-based execution entity fails in executing a requested functional activity by adjusting the invocation priorities of the execution entities registered with the subtask that requested the failing activity.

13. The method of any of claims 9 to 12, wherein each one registered execution entity has associated an invocation priority, said invocation priority being unique for any execution entity being registered for one particular subtask; and wherein the step of triggering further comprises
invoking execution entities according to their unique invocation priority and redirecting a request to an execution entity with a next-lower invocation priority in case an initially invoked execution entity with a higher invocation priority failed in execution of the requested functional activity.

14. The method of claim 13, wherein per default for any subtask at least one script-based execution entity and at least one avatar-based execution entity is registered, the at least one script-based execution entity per default having associated thereto a higher invocation priority such that the avatar-based execution entity has a lower invocation priority associated thereto and acts as a fallback solution at run-time in case the execution of the one script-based execution entity fails.

15. A computer-readable medium having stored thereon computer-readable instructions that, when run on a computer, are configured for performing the steps of any of the methods of claims 9 to 14.
